# EUROPEAN PATENT SPECIFICATION

(11) **EP 2 204 952 B1**
(45) Date of publication and mention of the grant of the patent: **04.07.2012**
(21) Application number: 08800930.3
(22) Date of filing: 19.09.2008
(51) Int. Cl.: H04L 12/437, H04L 12/24, H04L 12/26, H04L 12/40, H04L 12/56

(54) **AUTOMATIC PROTECTION SWITCHING**
AUTOMATISCHEN SCHUTZUMSCHALTUNG
COMMUTATION DE PROTECTION AUTOMATIQUE

(30) Priority: 30.09.2007 CN 200710162765
(43) Date of publication of application: 07.07.2010
(73) Proprietor: Huawei Technologies Co., Ltd., Longgang District, Shenzhen Guangdong 518129 (CN)
(72) Inventor: HAO, Yinghai, Shenzhen Guangdong 518129 (CN); LV, Yongxin, Shenzhen Guangdong 518129 (CN); TAN, Guobin, Shenzhen Guangdong 518129 (CN)
(74) Representative: Isarpatent
(86) International application number: PCT/CN2008/072436
(87) International publication number: WO 2009/046655

(56) References cited:
- EP-A2- 1 416 671
- WO-A2-2006/128005
- CN-A- 1 929 390
- US-A1- 2007 147 231
- US-A1- 2007 211 742
- US-B1- 7 039 007
- US-B1- 7 065 038
- DINESH MOHAN NORTEL NETWORKS CANADA: "Draft Recommendation Y.1731 OEB_AMP#8211; OAM Functions and Mechanisms for Ethernet based networks; TD 54", ITU-T DRAFT STUDY PERIOD 2005-2008, INTERNATIONAL TELECOMMUNICATION UNION, GENEVA ; CH, vol. STUDY GROUP 13, 16 January 2006 (2006-01-16), pages 1-71, XP017410067,
- "Ethernet Protection Switching; G.8031/Y.1342 (06/06)", ITU-T DRAFT STUDY PERIOD 2005-2008, INTERNATIONAL TELECOMMUNICATION UNION, GENEVA ; CH, no. G.8031/Y.1342 (06/06, 6 June 2006 (2006-06-06), XP017404621,
- RAD DATA COMMUNICATIONS LTD: "Ethernet OAM", INTERNET CITATION, March 2006 (2006-03), pages 1-16, XP002480448, Retrieved from the Internet: URL:http://web.archive.org/web/20060314013 423/http://www.rad.com/RADCnt/M ediaServer/21878_EthOAM_WP.pdf [retrieved on 2008-05-16]

## Description

### Field of the Invention

The present invention relates to network management, and in particular, to a system, method, and device for Automatic Protection Switching (APS).

### Background of the Invention

With the fast development of new high-bandwidth services and the intensification of network convergence requirements, a Packet Switched (PS)-based transport network has gradually come into the spotlight. Compared with a traditional Synchronous Digital Hierarchy (SDH) network, the PS-based network has the merits of high bandwidth utilization and high flexibility. However, such merits are gained at the cost of Quality of Service (QoS), Operations, Administration, and Maintenance (OAM), and protection of the PS-based network. Therefor, whether the PS-based network can evolve to a next-generation transport network successfully depends on whether the QoS, OAM, and protection performance can be improved.

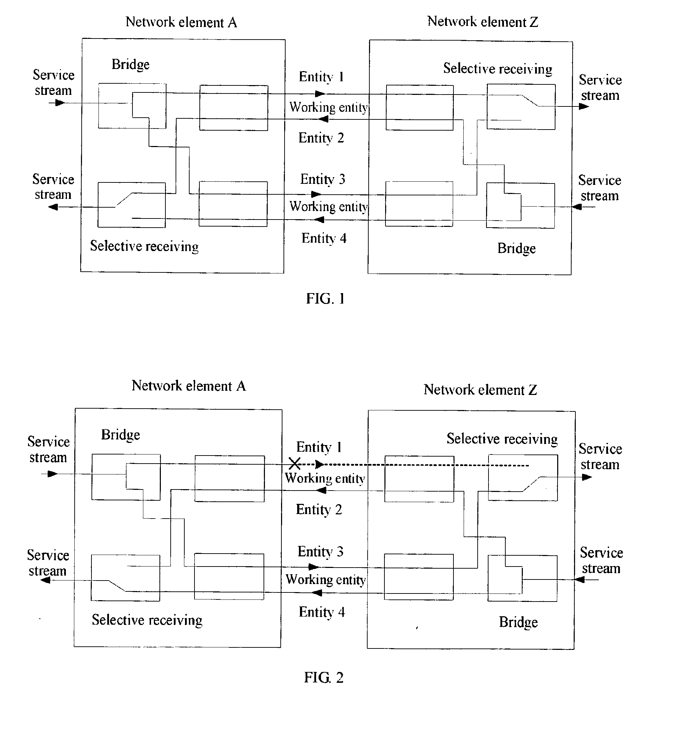

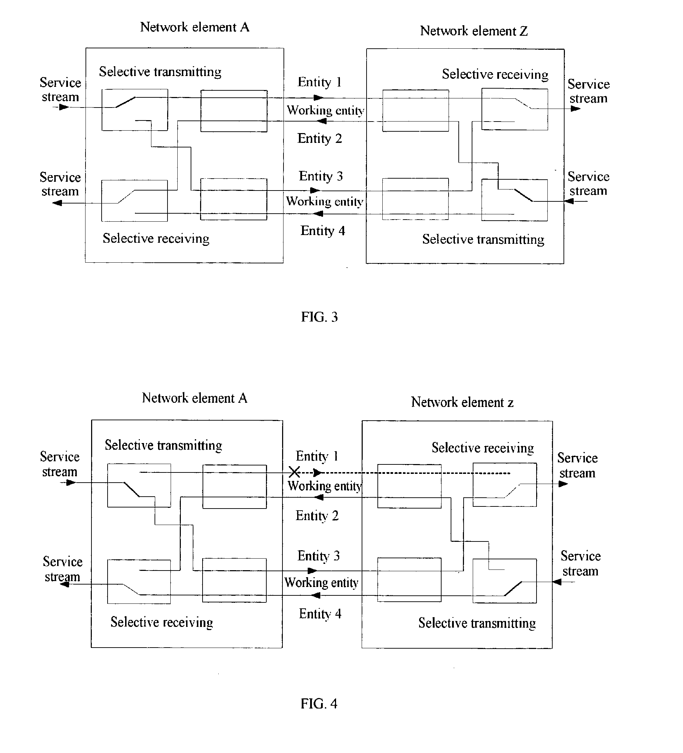

A PS-based transport network provides protection capabilities similar to those of a traditional SDH network. The International Telecommunication Union - Telecommunication Standardization Sector (ITU-T) proposes 1+1 and 1:1 protection mechanisms based on the APS protocol. According to whether simultaneous actions are taken for the services in two directions, the 1+1 and 1:1 APS protection mechanisms are categorized into unidirectional switching and bidirectional switching. In unidirectional switching, the services in two directions are switched independently, and actions are taken for the service in the impacted direction only after the switching is triggered. The bidirectional switching is contrary. That is, the services in both directions are switched together no matter whether the impact is unidirectional or bidirectional. According to whether the service is switched back to the working entity after recovery of the working entity, the protection mechanisms are categorized into revertive switching and non-revertive switching. Revertive switching means that the service is switched to the protection entity after the working entity fails, and switched back to the working entity after the working entity recovers to normal and after a delay once the switching is released by the protection entity. Non-revertive switching is contrary. That is, the service is not switched back to the working entity actively after the working entity recovers to normal. Depending on the times of exchanging APS protocol message during the switching, the protection mechanism is divided into stage 1, stage 2 and stage 3. For 1:1 protection, extra services can run when the protection entity is idle. Both the 1+1 and the 1:1 APS protection mechanisms support group protection. If multiple services share the same physical path of the working entity and the same physical path of the protection entity, the multiple services constitute a protection group and are treated as an entirety. The services in a protection group share a state machine and take actions together in the case of protection switching. Group protection improves the switching speed and saves OAM resources. The principles of the 1+1 protection switching and the 1:1 protection switching are described below, taking the stage 1 APS bidirectional switching as an example. FIG. 1 shows a 1+1 protection switching architecture. At the source of the transport entity, a service is sent to both the working entity and the protection entity permanently. At the sink of the transport entity, either the service received by the working entity or the service received by the protection entity is selected, depending on the states of the working entity and the protection entity. When the working entity fails, as shown in FIG. 2, a network element Z detects the failure, and initiates switching after a delay (if a delay is configured). The local side switches the service first, and then sends an APS protocol message to the peer side to request the peer side to switch the service. Finally, the services in both directions are switched to the protection entity and recover to normal. When the working entity recovers to normal again, in the case of revertive switching, the network element Z initiates switching release after a Wait-To-Restore (WTR) time, and the services in both directions are switched back to the working entity; and in the case of non-revertive switching, the services are retained on the protection entity until the network element Z detects that a new trigger condition of switching is fulfilled. FIG. 3 shows a 1:1 protection switching architecture. In the 1:1 protection switching, at the source of the transport entity, a service is sent to either the working entity or the protection entity selectively; and at the sink of the transport entity, the switching state depends on the states of the working entity and the protection entity. The service is switched to the selected entity through the collaboration of the APS protocol message and the source. When the working entity fails, the network element Z detects the failure, as shown in FIG. 4. The switching is initiated after a delay (if a delay is configured). The local side switches the service first, and then sends an APS message to the peer side to request the peer side to switch the service. Finally, the services in both directions are switched to the protection entity and recover to normal. When the working entity recovers to normal again, in the case of revertive switching, the network element Z initiates switching release after a WTR time, and the services in both directions are switched back to the working entity; and in the case of non-revertive switching, the services are retained on the protection entity until the network element Z detects that a new trigger condition of switching is fulfilled.

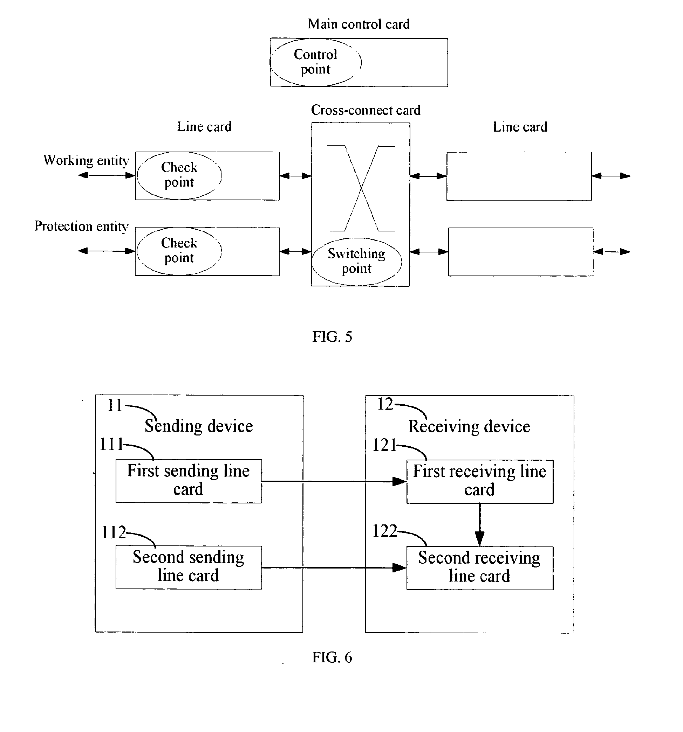

The subject matter of the APS protocol is inherited from SDH. In an SDH network, the APS protocol implementation technology is very mature. A traditional SDH network is characterized by distributed detection, centralized control, and centralized switching. As shown in FIG. 5, the fiber state and the K byte are detected on the line card. When the change of the fiber state or a new K byte is detected, the relevant information is reported to the APS protocol control module on the main control card. After making a switching decision, the APS protocol control module delivers the switching result to a cross-connect card, and the switching process is completed. If collaboration from the peer side is required, the APS protocol control module constructs an APS request message first, and sends it to the peer side through a line card to finish interaction with the peer side, and then notifies the cross-connect card to perform switching.

In the process of implementing the present invention, the inventor finds at least the following defects in the prior art:

In a PS-based transport network, the traditional APS protocol implementation technology is no longer applicable. For example, in a traditional SDH network, the APS protection implementation technology is specific to the optical interface level, and the number of protection groups on a network element does not exceed 100. In a PS-based transport network, the protected object may be a tunnel such as a Label Switching Path (LSP), a pseudo wire, or a connection, and therefore, there are a large number of protection groups. There are usually thousands of, or even tens of thousands of, protection groups on a network element. Consequently, the APS protection implementation technology in the traditional SDH network is not applicable to a PS-based transport network. In a traditional SDH network, all protection groups are controlled on a main control card in a centralized way. Once the main control card is abnormal, all protection groups are impacted. Even if the main control card is protected in active/standby mode, the implementation of the protection is complicated because the protocol control module on the active card needs to be synchronized with that on the standby card. In a PS-based transport network, the switching destination point is generally selected on the line card, and the switching network card performs only forwarding according to the destination information of the data element, and is unable to implement centralized switching control. WO2006/128005 discloses automatic protection switching for media packets, such as ATM cells or IP packets that carry media content, in a device that includes an Ethernet switching fabric, whereby one of media processing resources of the device and the Ethernet switching fabric is configured to replicate egress media packets from the media processing resource to the working and protection APS interfaces.

US2007/147231 A1 discloses a path protection method that is capable of path protection without extra cost and able to improve path switching efficiency. The method includes the steps of associating a virtual network identifier assigned to one or more users with a virtual network identifier for management, the virtual network identifier assigned to one or more users being regarded as one path to set a path for current use and a spare path; and when switching the currently-used path and the spare path, according to service class information included in the virtual network identifier for management, a path corresponding to a virtual network identifier for management having a higher service class than other paths is preferentially switched to.

### Summary of the Invention

An object of the invention addresses a receiving device as claimed in independent claim 1. Further objects of the invention address Automatic Protection Switching, APS, systems as claimed in independent claims 3 and 5, as well as Automatic Protection Switching, APS, methods as claimed in independent claims 8 and 10. The preferred embodiments of the invention are addressed in the correspondingly dependent claims.

### Brief Description of the Drawings

FIG. 1 shows a bidirectional 1+1 APS architecture in the prior art;
FIG. 2 shows a bidirectional 1+1 APS architecture in the case that a working entity fails in the prior art;
FIG. 3 shows a bidirectional 1:1 APS architecture in the prior art;
FIG. 4 shows a bidirectional 1:1 APS architecture in the case that a working entity fails in the prior art;
FIG. 5 shows an APS architecture in a traditional SDH network in the prior art;
FIG. 6 shows a structure of an APS system according to a first embodiment of the present invention;
FIG. 7 shows a detailed structure of an APS system according to the first embodiment of the present invention;
FIG. 8 shows a detailed structure of an APS system according to the first embodiment of the present invention;
FIG. 9 shows a detailed structure of an APS system according to the first embodiment of the present invention;
FIG. 10 shows a distributed 1+1 APS architecture according to a second embodiment of the present invention;
FIG. 11 is a flowchart of a distributed 1+1 APS method according to the second embodiment of the present invention;
FIG. 12 shows a distributed 1:1 APS architecture according to a third embodiment of the present invention;
FIG. 13 is a flowchart of a distributed 1:1 APS method according to the third embodiment of the present invention;
FIG. 14 shows a centralized 1+1 APS architecture according to a fourth embodiment of the present invention;
FIG. 15 is a flowchart of a centralized 1+1 APS method according to the fourth embodiment of the present invention;
FIG. 16 shows a centralized 1:1 APS architecture according to a fifth embodiment of the present invention;
FIG. 17 is a flowchart of a centralized 1:1 APS method according to the fifth embodiment of the present invention;
FIG. 18 shows a structure of a receiving device according to a sixth embodiment of the present invention;
FIG. 19 shows another structure of a receiving device according to the sixth embodiment of the present invention; and
FIG. 20 shows a structure of a sending device according to a seventh embodiment of the present invention.

### Detailed Description of the Embodiments

To make the technical solution, objectives and merits of the present invention clearer, the following describes the embodiments of the present invention in detail with reference to accompanying drawings.

In the embodiments of the present invention, the first receiving line card and the second receiving line card check arrival of continuity check messages, and perform centralized switching control on the line cards automatically according to the check result, thus improving APS efficiency and reliability of a PS-based transport network.

### Embodiment 1

As shown in FIG. 6, an APS system is disclosed in this embodiment. The system includes a sending device 11 and a receiving device 12.

The sending device 11 includes:
a first sending line card 111, connected to a working entity and adapted to send a continuity check message; and
a second sending line card 112, connected to a protection entity and adapted to send a continuity check message.

The receiving device 12 includes:
a first receiving line card 121, connected to the working entity and adapted to: receive the continuity check message from the sending device 11, and send a check failure notification if no continuity check message is received within a preset time; and
a second receiving line card 122, connected to the protection entity and adapted to: receive the continuity check message from the sending device 11, and perform service switching if the continuity check message and the check failure notification of the first receiving line card are received within a preset time.

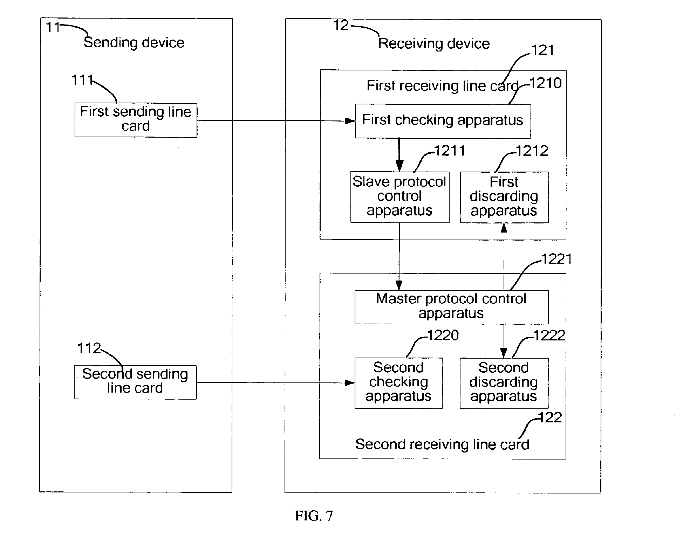

As shown in FIG. 7, when the system performs 1+1 protection switching:

The first receiving line card 121 may include:
a first checking apparatus 1210, adapted to receive a continuity check message from the sending device 11;
a slave protocol control apparatus 1211, adapted to send a check failure notification when the first checking apparatus 1210 receives no continuity check message within the preset time; and
a first discarding apparatus 1212, adapted to set the state of the working entity in the forwarding table entries of the receiving device 12 to a discarding state after receiving a switching notification from the second receiving line card 122.

Accordingly, the second receiving line card 122 includes:
a second checking apparatus 1220, adapted to receive a continuity check message from the sending device 11;
a master protocol control apparatus 1221, adapted to: receive a check failure notification from the first receiving line card 121, and send a switching notification when receiving a continuity check message and a check failure notification within the preset time; and
a second discarding apparatus 1222, adapted to set the state of the protection entity in the forwarding table entries of the receiving device 12 to a receiving state after receiving a switching notification from the master protocol control apparatus 1221.

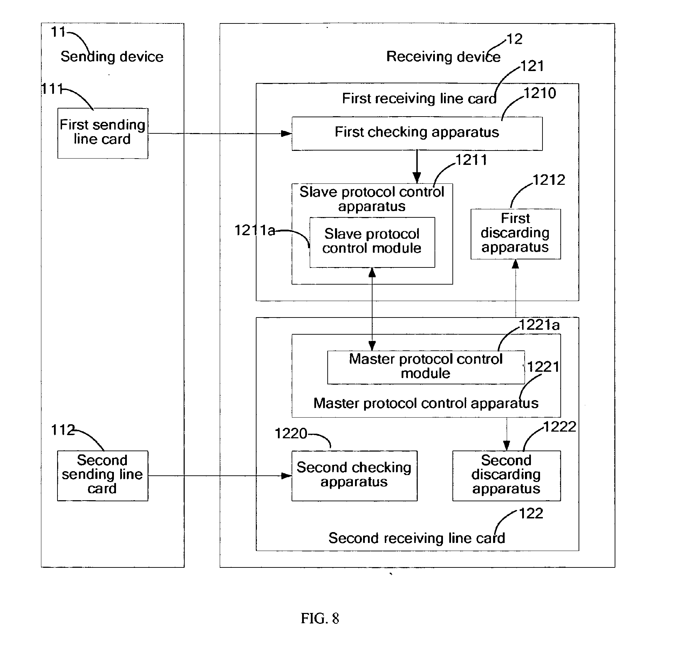

Further, to survive exceptions (for example, the line card is out of service or fails), a dual protocol control point is proposed herein. Each protection group has a master protocol control module located on the line card of the protection entity and a slave protocol control module located on the line card of the working entity. Normally, the master protocol control module is active. When the line card of the master protocol control module is out of service or fails, if the working entity is not on this line card, the slave protocol control point on the line card currently holding the working entity takes over the APS control. As shown in FIG. 8, more details are as follows:

The slave protocol control apparatus 1211 may further include:
a slave protocol control module 1211 a, adapted to: send a state message to the second receiving line card 122 periodically, and, when no state message is received from the second receiving line card 122 within at least one period, set the state of the working entity in the forwarding table entries of the receiving device 12 to a receiving state and set the state of the protection entity to a discarding state.

The master protocol control apparatus 1221 may further include:
a master protocol control module 1221 a, adapted to send a state message to the first receiving line card 121 periodically.

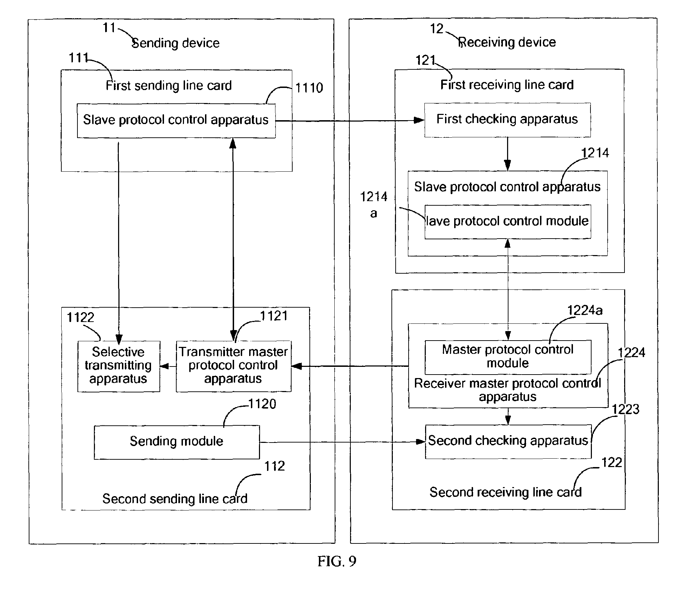

As shown in FIG. 9, when the system performs 1:1 protection switching:

The first receiving line card 121 may include:
a first checking apparatus 1213, adapted to receive a continuity check message from the sending device 11; and
a slave protocol control apparatus 1214, adapted to send a check failure notification when the first checking apparatus 1213 receives no continuity check message within the preset time.

Accordingly, the second receiving line card 122 may include:
a second checking apparatus 1223, adapted to receive a continuity check message from the sending device 11; and
a receiver master protocol control apparatus 1224, adapted to: receive a check failure notification from the first receiving line card 121, and send a switching notification to the second sending line card 112 of the sending device 11 when receiving a continuity check message and a check failure notification within the preset time.

Accordingly, the second sending line card 112 may include:
a sending module 1120, adapted to send a continuity check message;
a transmitter master protocol control apparatus 1121, adapted to: resolve the switching notification after receiving the switching notification from the receiving device 12, and broadcast the resolved switching notification; and
a selective transmitting apparatus 1122, adapted to set the state of the protection entity in the forwarding table entries of the sending device 11 to a sending state after receiving a switching notification broadcast by the transmitter master protocol control apparatus 1121.

The slave protocol control apparatus 1214 may further include:
a slave protocol control module 1214a, adapted to: send a state message to the second receiving line card 122 periodically, and, when no state message is received from the second receiving line card 122 within at least one period, send a switching update notification to the second sending line card 112.

The receiver master protocol control apparatus 1224 may further include:
a master protocol control module 1224a, adapted to send a state message to the first receiving line card 121 periodically.

Accordingly, the transmitter master protocol control apparatus 1121 is further adapted to: resolve the switching update notification after receiving the switching update notification from the receiving device 12, and broadcast the resolved switching update notification.

The selective transmitting apparatus 1122 is further adapted to set the state of the protection entity in the forwarding table entries of the sending device 11 to a non-sending state after receiving a switching update notification broadcast by the transmitter master protocol control apparatus 1121.

Further, the first sending line card 111 may further include:
a slave protocol control module 1110, adapted to: send a state message to the second sending line card 112 periodically, and, when no state message is received from the second sending line card 112 within at least one period, notify the selective transmitting apparatus 1122 to set the state of the working entity in the forwarding table entries of the sending device 11 to a sending state.

The transmitter master protocol control apparatus 1121 of the second sending line card 112 is further adapted to send a state message to the first sending line card 111 periodically.

In the system disclosed in this embodiment, the first receiving line card 121 and the second receiving line card 122 check arrival of continuity check messages sent by the sending device 12, and perform centralized switching control on the line cards automatically according to the check result, thus improving APS efficiency and reliability of a PS-based transport network.

### Embodiment 2

An APS method is disclosed in this embodiment. This method employs the distributed APS implementation technology, and APS protection groups are distributed on multiple line cards for processing. Failure detection, protocol control, and switching implementation are handled in a distributed way. The method includes the following:

The first receiving line card and the second receiving line card at the receiver check whether a continuity check message is received from the transmitter, and perform service switching if the first receiving line card does not receive the continuity check message but the second receiving line card receives the continuity check message within a preset time.

Taking APS 1+1 protection as an example, the APS method disclosed in this embodiment is detailed below.

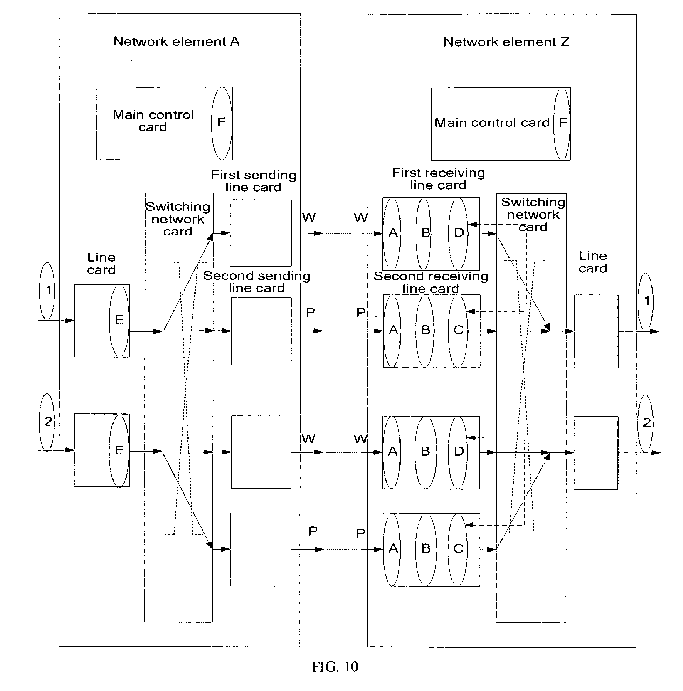

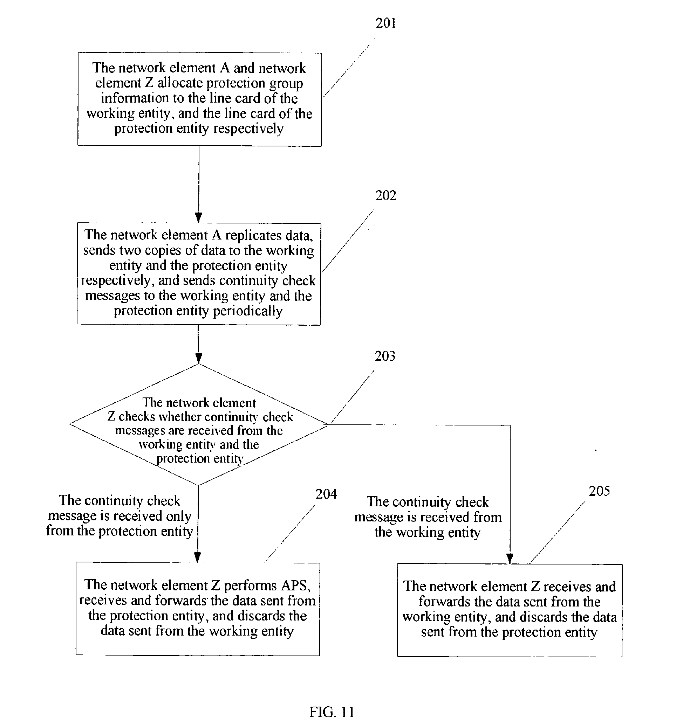

As shown in FIG. 10 and FIG. 11, the APS method disclosed in this embodiment includes the following steps:
Step 201: The network element A and network element Z allocate protection group information to the line card of the working entity, and the line card of the protection entity respectively.

Through a protection group allocating apparatus F on the main control card of the network element A, the network element A allocates protection group information to a dual transmitting apparatus E on a service uplink line card; and, through a protection group allocating apparatus F on the main control card of the network element Z, the network element Z allocates protection group information to a checking apparatus A, a discarding apparatus B and a master protocol control apparatus C located on the second receiving line card of the protection entity, and to a checking apparatus A, a discarding apparatus B and a slave protocol control apparatus D located on the first receiving line card of the working entity;

The master protocol control apparatus C may implement complete APS protocol processing functions, including APS protocol message processing, state machine maintenance, and switching decision. When the second receiving line card is normal, the master protocol control apparatus C controls the APS switching of the protection group. When the second receiving line card is out of service or fails, the slave protocol control apparatus D controls the APS switching of the protection group. Because the state of the protection group seldom changes when the second receiving line card of the protection entity is out of service or fails, the function of the slave protocol control apparatus D is generally a subset of the function of the master protocol control apparatus C.

Step 202: The network element A replicates the sent data. The first sending line card and the second sending line card send two copies of data to the working entity and the protection entity respectively, and send continuity check messages to the working entity and the protection entity periodically.

By means of the dual transmitting apparatus E on the service uplink line card, the network element A sends the two copies of data to the working entity and the protection entity through the first sending line card and the second sending line card respectively. The network element A may include multiple service uplink line cards. Each service uplink line card holds a dual transmitting apparatus E.

Step 203: The network element Z checks whether continuity check messages are received from the working entity and the protection entity within the preset time. If a continuity check message is received from the working entity, the process proceeds to step 205; and, if the continuity check message is received only from the protection entity, the process proceeds to step 204.

Through the checking apparatus A on the first receiving line card and the second receiving line card, the network element Z checks whether continuity check messages are received from the working entity and the protection entity within the preset time (generally a sending period of a continuity check message). If the network element Z receives the continuity check message from the working entity, it indicates that the working entity is normal, and that the network element Z does not need to perform protection switching. If the network element Z receives the continuity check message only from the protection entity, it indicates that the working entity fails, and that the network element Z needs to perform protection switching.

Step 204: The network element Z performs APS, receives and forwards the data sent from the protection entity, and discards the data sent from the working entity.

Both the working entity and the protection entity provide a discard flag indicative of the current selective receiving state. The discard flag is stored in the forwarding table entries of the network element Z. The discarding apparatus decides whether to discard the received data according to the discard flag in the forwarding table entries, thus implementing selection of the working entity or the protection entity.

If the first receiving line card receives no continuity check message within the preset time, the checking apparatus A on the first receiving line card sends a check failure notification to the slave protocol control apparatus D on the first receiving line card. After receiving the check failure notification, the slave protocol control apparatus D on the first receiving line card forwards the check failure notification to the master protocol control apparatus C on the second receiving line card through a switching network card. After receiving the check failure notification, the master protocol control apparatus C on the second receiving line card decides that APS is required, and sends a switching notification to the discarding apparatus B on the first receiving line card and the discarding apparatus B on the second receiving line card respectively. After receiving the switching notification, the discarding apparatus B on the first receiving line card and the discarding apparatus B on the second receiving line card set the state of the discard flag of the working entity in the receiver forwarding table entries to a discarding state, and set the state of the discard flag of the protection entity to a receiving state. According to the new state of the discard flag in the forwarding table entries, the network element Z receives and forwards the data sent from the protection entity, and discards the data sent from the working entity.

For the APS that requires collaboration of the peer side (such as bidirectional switching), the master protocol control apparatus on the second receiving line card constructs an APS protocol message inclusive of a switching notification according to the APS protocol, sends the APS protocol message to the master protocol control apparatus on the second sending line card of the protection entity of the network element A, thus requesting the network element A to perform the APS operation. After receiving the APS protocol message, the master protocol control apparatus on the second sending line card of the protection entity of the network element A resolves the message to obtain the switching notification, decides that APS is required according to the switching notification, and sends the switching notification to the discarding apparatus on the first sending line card of the working entity of the network element A and the discarding apparatus on the second sending line card of the protection entity of the network element A respectively. After receiving the switching notification, the discarding apparatus on the first sending line card of the working entity of the network element A and the discarding apparatus on the second sending line card of the protection entity of the network element A set the state of the discard flag of the working entity in the forwarding table entries of the network element A to a discarding state, and set the state of the discard flag of the protection entity to a receiving state. According to the new states of the discard flag in the forwarding table entries, network element A receives and forwards the data sent from the protection entity, and discards the data sent from the working entity.

Step 205: The network element Z receives and forwards the data sent from the working entity, and discards the data sent from the protection entity.

When the first receiving line card receives a continuity check message, the checking apparatus A on the first receiving line card sends a check success notification to the slave protocol control apparatus D on the first receiving line card. The slave protocol control apparatus D on the first receiving line card forwards the received check success notification to the master protocol control apparatus C on the second receiving line card. After receiving the check success notification, the master protocol control apparatus C on the second receiving line card decides that no APS is required. The network element Z goes on receiving and forwarding the data sent from the working entity, and discarding the data sent from the protection entity.

For group protection, multiple working entities are attached to the discarding apparatus on the first receiving line card of one of the working entities, and multiple protection entities are attached to the discarding apparatus on the second receiving line card of one of the protection entities. Therefore, the switching can be performed uniformly.

Besides, in the foregoing process, the master protocol control apparatus on the second receiving line card notifies the protection group state message to the slave protocol control apparatus on the first receiving line card periodically; and the slave protocol control apparatus on the first receiving line card notifies the working entity state message to the master protocol control apparatus on the second receiving line card periodically. If no state message is received from the peer side within at least one period, the master protocol control apparatus or the slave protocol control apparatus believes that the line card that holds the peer side is out of service or fails. The processing flow for an out-of-service or failed line card is as follows:

When the second receiving line card is out of service or fails, the protection group allocating apparatus on the main control card of the network element Z notifies the slave protocol control apparatus to take over the APS control. The slave protocol control apparatus sets the state of the discard flag of the working entity in the forwarding table entries of the network element Z to a receiving state, and sets the state of the discard flag of the protection entity to a discarding state.

When the second receiving line card recovers to normal, the protection group allocating apparatus on the main control card notifies the slave protocol control apparatus to stop the APS control.

The state message between the master protocol control apparatus on the second receiving line card and the slave protocol control apparatus on the first receiving line card, the switching notification between the master protocol control apparatus on the second receiving line card and the discarding apparatus on the second receiving line card, and the switching notification between the master protocol control apparatus on the second receiving line card and the discarding apparatus on the first receiving line card are transmitted through a forwarding plane. That is, the communication initiation point constructs a notification message and delivers it to a forwarding engine (such as NP). The forwarding engine forwards the notification message to the destination forwarding engine of the relevant line card through a switching network card according to the destination information of the message. The destination forwarding engine resolves the received notification message. The state message between the master protocol control apparatus on the second receiving line card and the slave protocol control apparatus on the first receiving line card is delivered to the destination protocol control apparatus directly; and the switching notification is forwarded to the discarding apparatus.

The dual transmitting apparatus, checking apparatus, master protocol control apparatus, slave protocol control apparatus, and discarding apparatus in this embodiment are implemented through hardware. The communication between them involves no software. The whole APS process is implemented through hardware completely, thus ensuring high efficiency of APS. The APS method disclosed in this embodiment distributes the APS protection groups onto multiple line cards for processing, and one line card supports simultaneous processing of a large number of protection groups. In this way, the quantity of protection groups supported by a network element increases linearly with the increase of the line cards. The APS method disclosed in this embodiment employs distributed processing to ensure high reliability of APS. Once a line card fails, the failure exerts an impact on only the services related to the failed line card.

### Embodiment 3

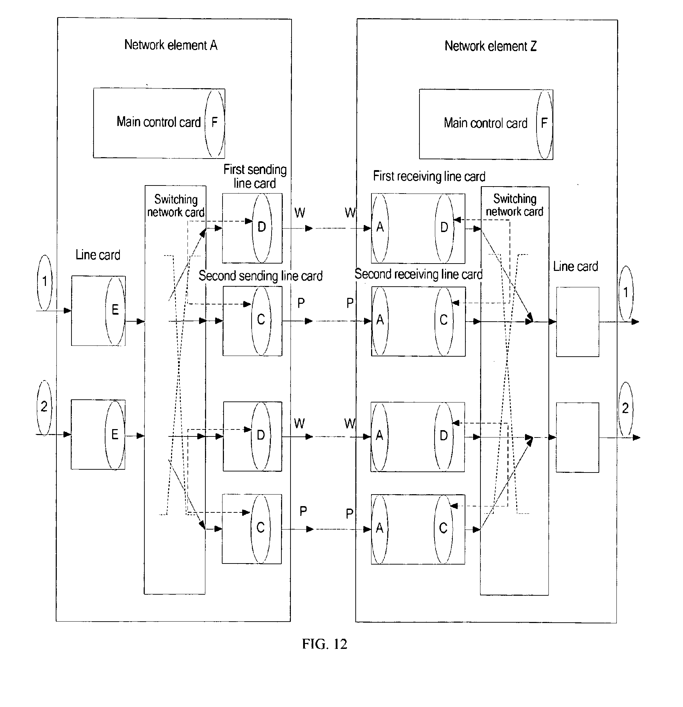

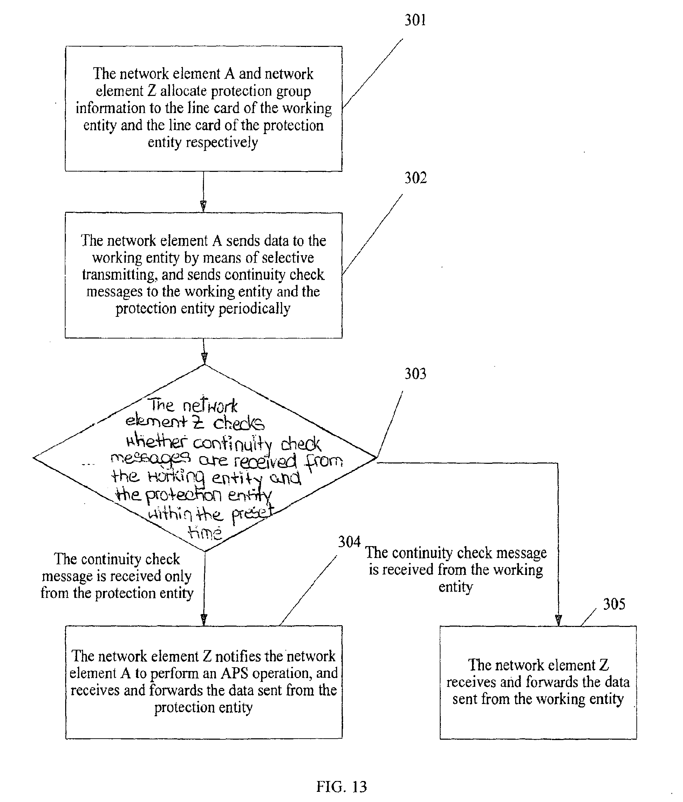

This embodiment describes the APS method, taking APS 1:1 protection as an example. As shown in FIG. 12 and FIG. 13, the APS method in this embodiment includes the following steps:
Step 301: The network element A and network element Z allocate protection group information to the line card of the working entity and the line card of the protection entity respectively.

Through a protection group allocating apparatus F on the main control card of the network element A, the network element A allocates protection group information to a selective transmitting apparatus E on a service uplink line card, a slave protocol control apparatus D located on the first sending line card of the working entity, and a master protocol control apparatus C located on the second sending line card of the protection entity. Through a protection group allocating apparatus F on the main control card of the network element Z, the network element Z allocates protection group information to a checking apparatus A and a master protocol control apparatus C on the second receiving line card of the protection entity, and to a checking apparatus A and a slave protocol control apparatus D on the first receiving line card of the working entity.

The master protocol control apparatus C may implement complete APS protocol processing functions, including APS protocol message processing, state machine maintenance, and switching decision. When the second sending line card or the second receiving line card is normal, the master protocol control apparatus C on the line card controls the APS switching of the protection group. When the second sending line card or the second receiving line card is out of service or fails, the slave protocol control apparatus D on the line card controls the APS switching of the protection group. Because the state of the protection group seldom changes when the second sending line card or the second receiving line card is out of service or fails, the function of the slave protocol control apparatus D is generally a subset of the function of the master protocol control apparatus C.

Step 302: The network element A sends data to the working entity through the first sending line card by means of selective transmitting, and the first sending line card and the second sending line card send continuity check messages to the working entity and the protection entity periodically.

The network element A sends the data to the working entity by means of selective transmitting through the first sending line card by using the selective transmitting apparatus E on the service uplink line card. The detailed principles are as follows: The network element A presets the forwarding table entry information in the normal case and in the case of APS into the forwarding table entries, provides a switching flag indicative of the current switching state, and sets up a mapping between the switching flag and the forwarding table entry information in the forwarding table entries. The network element A sends the data to the correct transport entity by means of selective transmitting according to the forwarding table entry information corresponding to the switching flag in the forwarding table entries. In this way, the data is sent to the working entity or protection entity by means of selective transmitting.

The network element A may include multiple service uplink line cards, and each service uplink line card holds a selective transmitting apparatus E.

Step 303: The network element Z checks whether continuity check messages are received from the working entity and the protection entity within the preset time. If a continuity check message is received from the working entity, the process proceeds to step 305; and, if the continuity check message is received only from the protection entity, the process proceeds to step 304.

Through the checking apparatus A on the first receiving line card and the checking apparatus A on the second receiving line card, the network element Z checks whether continuity check messages are received from the working entity and the protection entity within the preset time. If the network element Z receives the continuity check message from the working entity, it indicates that the working entity is normal, and that the network element Z does not need to notify the network element A to perform protection switching. If the network element Z receives only the continuity check message from the protection entity, it indicates that the working entity fails, and that the network element Z needs to notify the network element A to perform protection switching.

Step 304: The network element Z notifies the network element A to perform an APS operation. After the network element A finishes the APS, the network element Z receives and forwards the data sent from the protection entity.

If the first receiving line card of the network element Z receives no continuity check message within the preset time, the checking apparatus A on the first receiving line card sends a check failure notification to the slave protocol control apparatus D on the first receiving line card. After receiving the check failure notification, the slave protocol control apparatus D on the first receiving line card forwards the check failure notification to the master protocol control apparatus C on the second receiving line card through a switching network card. After receiving the check failure notification, the master protocol control apparatus C on the second receiving line card decides that APS is required, constructs an APS protocol message inclusive of a switching notification according to the APS protocol, and sends the APS protocol message to the master protocol control apparatus C on the second sending line card of the network element A. After receiving the APS protocol message, the master protocol control apparatus on the second sending line card resolves the message to obtain the switching notification, and broadcasts the switching notification to the selective transmitting apparatuses E on all service uplink line cards. After receiving the switching notification, the selective transmitting apparatuses E on all service uplink line cards set the switching flag in the forwarding table entries of the network element A to indicate that the second sending line card is in the sending state; that is, the forwarding table entry information corresponding to the switching flag indicates that the data is to be sent through the second sending line card. After the network element A finishes the protection switching, the network element Z receives and forwards the data sent from the protection entity.

For the APS that requires collaboration of the peer side (such as bidirectional switching), the master protocol control apparatus on the second receiving line card broadcasts a switching notification to the selective transmitting apparatuses on all service uplink line cards inside the network element Z. After receiving the switching notification, the selective transmitting apparatuses on all service uplink line cards inside the network element Z set the switching flag in the forwarding table entries of the network element Z to indicate that the second sending line card is in the sending state; that is, the forwarding table entry information corresponding to the switching flag indicates that the data is to be sent through the second sending line card. After the network element A finishes the protection switching, the network element A receives and forwards the data sent from the protection entity.

Step 305: The network element Z receives and forwards the data sent from the working entity.

When the first receiving line card receives a continuity check message, the checking apparatus A on the first receiving line card sends a check success notification to the slave protocol control apparatus D on the first receiving line card. After receiving the check success notification, the slave protocol control apparatus D on the first receiving line card forwards the received check success notification to the master protocol control apparatus C on the second receiving line card. After receiving the check success notification, the master protocol control apparatus C on the second receiving line card decides that no APS is required. The network element Z goes on receiving and forwarding the data sent from the working entity.

For group protection, multiple working entities are attached to the selective transmitting apparatus corresponding to the first sending line card of one of the working entities, and multiple protection entities are attached to the selective transmitting apparatus corresponding to the second sending line card of one of the protection entities. Therefore, the switching can be performed uniformly.

Besides, in the foregoing process, the master protocol control apparatus on the second receiving line card notifies the protection group state message to the slave protocol control apparatus on the first receiving line card periodically; and the slave protocol control apparatus on the first receiving line card notifies the working entity state message to the master protocol control apparatus on the second receiving line card periodically. If no state message is received from the peer side within at least one period, the master protocol control apparatus or the slave protocol control apparatus believes that the line card that holds the peer side is out of service or fails. The processing flow for an out-of-service or failed line card is as follows:

When the second receiving line card is out of service or fails, the protection group allocating apparatus on the main control card of the network element Z notifies the slave protocol control apparatus on the first receiving line card to take over the APS control. The slave protocol control apparatus on the first receiving line card sends a switching update notification to the master protocol control apparatus on the second sending line card. After receiving the switching update notification, the master protocol control apparatus on the second sending line card sets the switching flag in the forwarding table entries of the network element A to indicate that the first sending line card is in the sending state.

When the second receiving line card recovers to normal, the protection group allocating apparatus on the main control card of the network element Z notifies the slave protocol control apparatus on the first receiving line card to stop the APS control.

Besides, in the foregoing process, the master protocol control apparatus on the second sending line card notifies the protection group state message to the slave protocol control apparatus on the first sending line card periodically; and the slave protocol control apparatus on the first sending line card notifies the working entity state message to the master protocol control apparatus on the second sending line card periodically. If no state message is received from the peer side within at least one period, the master protocol control apparatus or the slave protocol control apparatus believes that the line card that holds the peer side is out of service or fails. The processing flow for an out-of-service or failed line card is as follows:

When the second sending line card is out of service or fails, the protection group allocating apparatus on the main control card of the network element A notifies the slave protocol control apparatus on the first sending line card to take over the APS control. The slave protocol control apparatus on the first sending line card sets the switching flag in the forwarding table entries of the network element A to indicate that the first sending line card is in the sending state.

When the second sending line card recovers to normal, the protection group allocating apparatus on the main control card of the network element A notifies the slave protocol control apparatus to stop the APS control.

The selective transmitting apparatus, checking apparatus, master protocol control apparatus, and slave protocol control apparatus in this embodiment are implemented through hardware. The communication between them involves no software. The whole APS process is implemented through hardware completely, thus ensuring high efficiency of APS. The APS method disclosed in this embodiment distributes the APS protection groups onto multiple line cards for processing, and one line card supports simultaneous processing of a large number of protection groups. In this way, the quantity of protection groups supported by a network element increases linearly with the increase of the line cards. The APS method disclosed in this embodiment employs distributed processing to ensure high reliability of APS.. Once a line card fails, the failure exerts an impact on only the services related to the failed line card.

### Embodiment 4

In the second and third embodiments above, the checking apparatus is located on the first receiving line card of the working entity and the second receiving line card of the protection entity respectively. In practice, the checking apparatus on the first receiving line card of the working entity and the checking apparatus on the second receiving line card may be relocated to the second receiving line card of the protection entity. That is, the checking apparatus of the working entity, the checking apparatus of the protection entity, and the master protocol control apparatus are on the same line card. In this way, the continuity check message of the working entity is forwarded through the switching network card to the line card of the protection entity for checking, so that the master protocol control apparatus can obtain the state information of the working entity and the protection entity, and that centralized checking is implemented. The discarding apparatus is still located on the first receiving line card of the working entity and the second receiving line card of the protection entity, and the slave protocol control apparatus is located on the main control card. Taking APS 1+1 protection as an example, the APS method disclosed in this embodiment is detailed below.

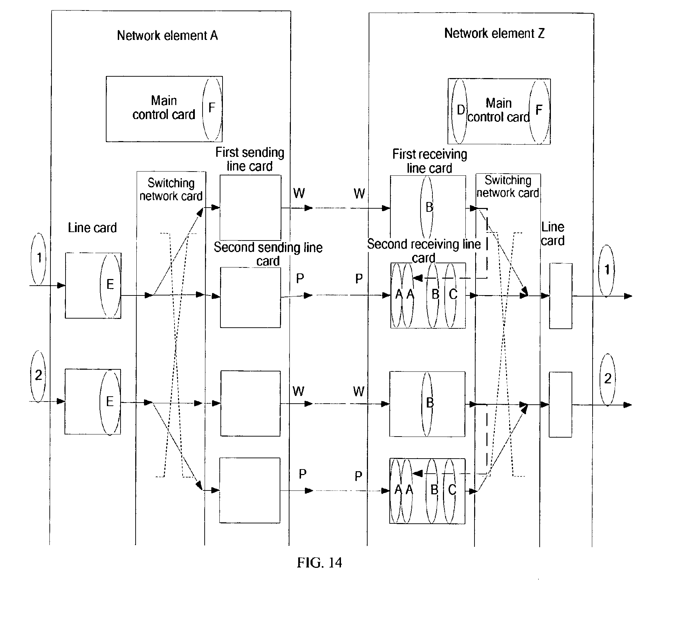

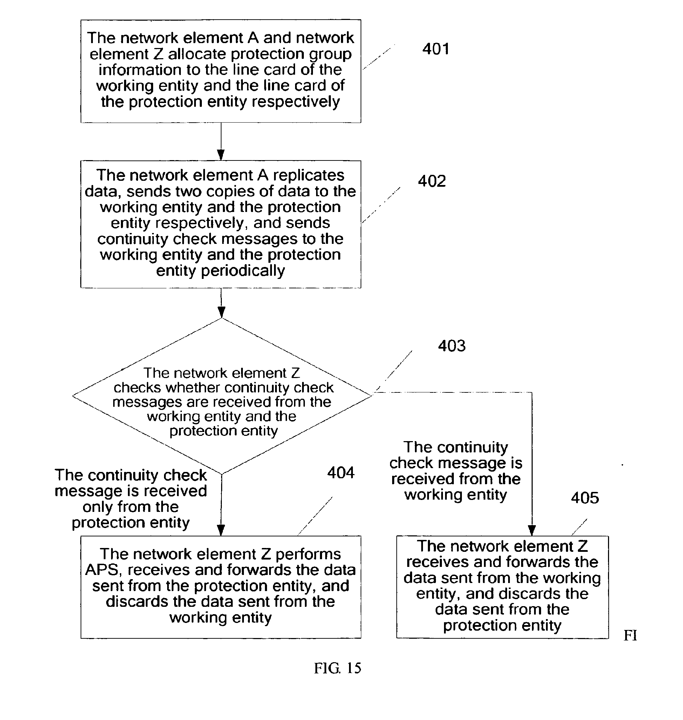

As shown in FIG. 14 and FIG. 15, the APS method disclosed in this embodiment includes the following steps:

Step 401: The network element A and network element Z allocate protection group information to the line card of the working entity and the line card of the protection entity respectively.

Through a protection group allocating apparatus F on the main control card of the network element A, the network element A allocates protection group information to a dual transmitting apparatus E on a service uplink line card; and, through a protection group allocating apparatus F on the main control card of the network element Z, the network element Z allocates protection group information to a checking apparatus A, a discarding apparatus B, and a master protocol control apparatus C on the second receiving line card of the protection entity, to a discarding apparatus B on the first receiving line card of the working entity, and to a slave protocol control apparatus D on the main control card of the network element Z.

Step 402: The network element A replicates the sent data. The first sending line card and the second sending line card send two copies of data to the working entity and the protection entity respectively, and send continuity check messages to the working entity and the protection entity periodically.

Through the dual transmitting apparatus E on the service uplink line card, the network element A sends the two copies of data to the first sending line card and the second sending line card respectively. The first sending line card and the second sending line card send the data to the working entity and the protection entity. The network element A may include multiple service uplink line cards, and each service uplink line card holds a dual transmitting apparatus E.

Step 403: The network element Z checks whether continuity check messages are received from the working entity and the protection entity within the preset time. If a continuity check message is received from the working entity, the process proceeds to step 405; and, if the continuity check message is received only from the protection entity, the process proceeds to step 404.

The first receiving line card of the working entity of the network element Z forwards the continuity check message from the working entity through a switching network card to the checking apparatus A on the second receiving line card of the protection entity of the network element Z. Through the two checking apparatuses A on the second receiving line card of the protection entity of the network element Z, the network element Z checks whether continuity check messages are received from the working entity and the protection entity. If the network element Z receives the continuity check message from the working entity, it indicates that the working entity is normal, and that the network element Z does not need to perform protection switching. If the network element Z receives the continuity check message only from the protection entity, it indicates that the working entity fails, and that the network element Z needs to perform protection switching.

Step 404: The network element Z performs an APS operation, receives and forwards the data sent from the protection entity, and discards the data sent from the working entity.

Both the working entity and the protection entity provide a discard flag indicative of the current selective receiving state. The discard flag is stored in the forwarding table entries of the network element Z. The discarding apparatus decides whether to discard the received data according to the discard flag in the forwarding table entries, thus implementing selection of the working entity or the protection entity.

The checking apparatus A on the second receiving line card sends a check failure notification to the master protocol control apparatus C on the second receiving line card, indicating that no continuity check message is received from the working entity. After receiving the notification, the master protocol control apparatus C on the second receiving line card of the protection entity of the network element Z decides that APS is required, and sends a switching notification to the discarding apparatus B on the first receiving line card and the discarding apparatus B on the second receiving line card respectively. After receiving the switching notification, the discarding apparatus B on the first receiving line card and the discarding apparatus B on the second receiving line card set the state of the discard flag of the working entity in the forwarding table entries of the network element Z to a discarding state, and set the state of the discard flag of the protection entity to a receiving state. According to the new state of the discard flag in the forwarding table entries, the network element Z receives and forwards the data sent from the protection entity, and discards the data sent from the working entity.

Step 405: The network element Z receives and forwards the data sent from the working entity, and discards the data sent from the protection entity.

The checking apparatus A on the second receiving line card sends a check success notification to the master protocol control apparatus C on the second receiving line card, indicating that a continuity check message is received from the working entity. After receiving the notification, the master protocol control apparatus C on the second receiving line card of the protection entity of the network element Z decides that no APS is required. The network element Z goes on receiving and forwarding the data sent from the working entity, and discarding the data sent from the protection entity.

In this embodiment, the checking apparatus on the first receiving line card of the working entity is relocated to the second receiving line card of the protection entity. Therefore, no state message needs to be transmitted between the master protocol control apparatus and the slave protocol control apparatus, and the master protocol control apparatus can obtain the state message of the working entity and the protection entity directly, thus improving the timeliness of the APS. Moreover, the slave protocol control apparatus is located on the main control card. Therefore, when the second receiving line card of the protection entity is out of service or fails, the main control card notifies the slave protocol control apparatus to take over the APS control in time, which further improves the timeliness of the APS. The dual transmitting apparatus, checking apparatus, master protocol control apparatus, slave protocol control apparatus, and discarding apparatus in this embodiment are implemented through hardware. The communication between them involves no software. The whole APS process is implemented through hardware completely, thus ensuring high efficiency of APS.

### Embodiment 5

Like the apparatuses in the fourth embodiment, the checking apparatus of the working entity, the checking apparatus of the protection entity, and the master protocol control apparatus in the fifth embodiment are on the same line card. Taking APS 1:1 protection as an example, the APS method disclosed in this embodiment is detailed below.

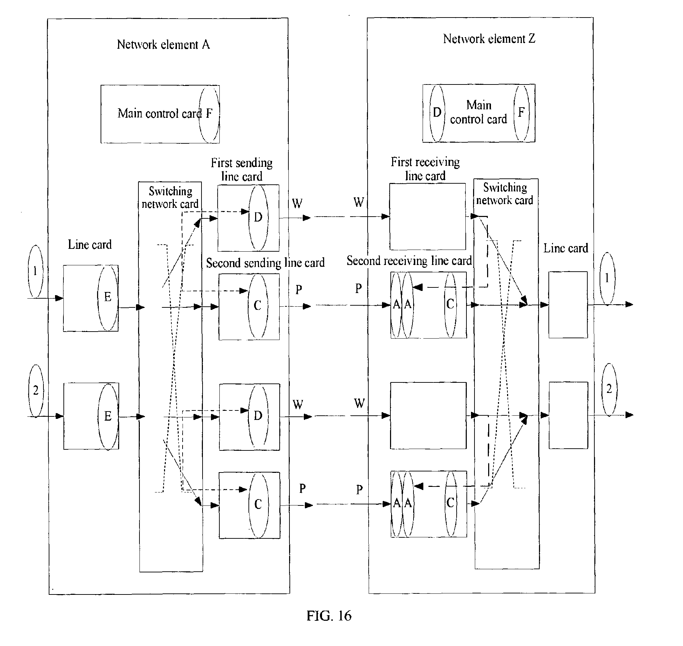

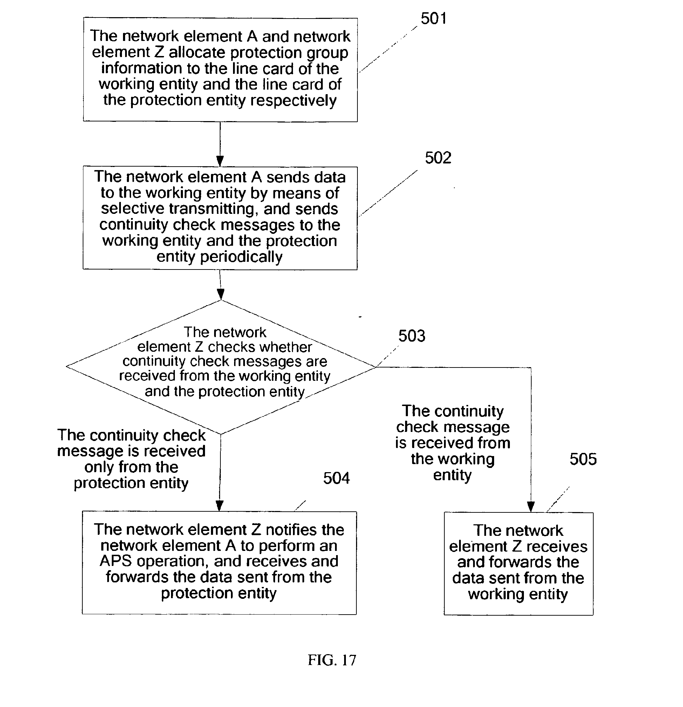

As shown in FIG. 16 and FIG. 17, the APS method disclosed in this embodiment includes the following steps:

Step 501: The network element A and network element Z allocate protection group information to the line card of the working entity and the line card of the protection entity respectively.

Through a protection group allocating apparatus F on the main control card of the network element A, the network element A allocates protection group information to a selective transmitting apparatus E on a service uplink line card, a slave protocol control apparatus D located on the first sending line card of the working entity, and a master protocol control apparatus C located on the second sending line card of the protection entity. Through a protection group allocating apparatus F on the main control card of the network element Z, the network element Z allocates protection group information to a checking apparatus A and a master protocol control apparatus C on the second receiving line card of the protection entity, and to a slave protocol control apparatus D on the main control card of the network element Z.

Step 502: The network element A sends data to the working entity through the first sending line card by means of selective transmitting, and the first sending line card and the second sending line card send continuity check messages to the working entity and the protection entity periodically.

The network element A sends the data to the working entity by means of selective transmitting through the first sending line card by using the selective transmitting apparatus E on the service uplink line card. The detailed principles are: The network element A presets the forwarding table entry information in the normal case and in the case of APS into the forwarding table entries, provides a switching flag indicative of the current switching state, and sets up a mapping between the switching flag and the forwarding table entry information in the forwarding table entries. The network element A sends the data to the correct transport entity by means of selective transmitting according to the forwarding table entry information corresponding to the switching flag in the forwarding table entries. In this way, the data is sent to the working entity or protection entity by means of selective transmitting.

The network element A may include multiple service uplink line cards, and each service uplink line card holds a selective transmitting apparatus E.

Step 503: The network element Z checks whether continuity check messages are received from the working entity and the protection entity within the preset time. If a continuity check message is received from the working entity, the process proceeds to step 505; and, if the continuity check message is received only from the protection entity, the process proceeds to step 504.

The first receiving line card forwards the continuity check message from the working entity through a switching network card to the checking apparatus A on the second receiving line card. Through the two checking apparatuses A on the second receiving line card, the network element Z checks whether continuity check messages are received from the working entity and the protection entity. If the network element Z receives the continuity check message from the working entity, it indicates that the working entity is normal, and that the network element Z does not need to notify the network element A to perform an APS operation. If the network element Z receives the continuity check message only from the protection entity, it indicates that the working entity fails, and that the network element Z needs to notify the network element A to perform an APS operation.

Step 504: The network element Z notifies the network element A to perform an APS operation, and receives and forwards the data sent from the protection entity.

The checking apparatus A on the second receiving line card sends a check failure notification to the master protocol control apparatus C on the second receiving line card, indicating that no continuity check message is received from the working entity. After receiving the notification, the master protocol control apparatus C on the second receiving line card decides that APS is required, constructs an APS protocol message inclusive of a switching notification according to the APS protocol, and sends the APS protocol message to the master protocol control apparatus C on the second sending line card. After receiving the APS protocol message, the master protocol control apparatus on the second sending line card resolves the message to obtain the switching notification, and broadcasts the switching notification to the selective transmitting apparatuses E on all service uplink line cards. After receiving the switching notification, the selective transmitting apparatuses E on all service uplink line cards set the switching flag in the forwarding table entries of the network element A to indicate that the second sending line card is in the sending state; that is, the forwarding table entry information corresponding to the switching flag indicates that the data is to be sent through the second sending line card. Afterward, the APS operation is performed. The network element Z receives and forwards the data sent from the protection entity.

Step 505: The network element Z receives and forwards the data sent from the working entity.

The checking apparatus A on the second receiving line card sends a check success notification to the master protocol control apparatus C on the second receiving line card, indicating that a continuity check message is received from the working entity. After receiving the notification, the master protocol control apparatus C on the second receiving line card decides that no APS is required. The network element Z goes on receiving and forwarding the data sent from the working entity.

In practice, if the first receiving line card of the working entity is out of service or fails, the checking apparatus on the second receiving line card of the protection entity receives no continuity check message from the working entity, and therefore, treats the working entity as failed and performs the APS operation. If the second receiving line card of the protection entity is out of service or fails, the main control card detects the exception, and therefore, the protection group allocating apparatus on the main control card notifies the slave protocol control apparatus on the main control card to exercise APS control for the protection group. If the service is currently on the protection entity, the main control card switches the service back to the working entity, and relocates the checking apparatus on the second receiving line card of the protection entity to the first receiving line card of the working entity. When the second receiving line card of the protection entity recovers to normal, the protection group allocating apparatus on the main control card notifies the slave protocol control apparatus on the main control card to stop the APS control for the protection group, hands the control right over to the master protocol control apparatus on the second receiving line card of the protection entity, and relocates the checking apparatus from the first receiving line card of the working entity to the second receiving line card of the protection entity.

In this embodiment, the checking apparatus on the first receiving line card of the working entity is relocated to the second receiving line card of the protection entity. Therefore, no state message needs to be transmitted between the master protocol control apparatus and the slave protocol control apparatus, and the master protocol control apparatus can obtain the state message of the working entity and the protection entity directly, thus improving the timeliness of the APS. Moreover, the slave protocol control apparatus is located on the main control card. Therefore, when the second receiving line card of the protection entity is out of service or fails, the main control card notifies the slave protocol control apparatus to take over the APS control in time, which further improves the timeliness of the APS. The dual transmitting apparatus, checking apparatus, master protocol control apparatus, slave protocol control apparatus, and discarding apparatus in this embodiment are implemented through hardware. The communication between them involves no software. The whole APS process is implemented through hardware completely, thus ensuring high efficiency of APS.

Further, the master protocol control apparatus, slave protocol control apparatus, selective transmitting apparatus, and discarding apparatus mentioned in the second to fifth embodiments may be implemented through software. The principles of implementing the APS through software are as follows:

If the checking apparatus on the second receiving line card of the protection entity discovers that the protection entity fails, the checking apparatus notifies the master protocol control apparatus on this line card through an interruption signal, and the master protocol control apparatus decides whether to perform switching. If the decision result indicates that APS is required, the master protocol control apparatus uses an inter-card message or an intra-card message to notify the selective transmitting apparatus or the discarding apparatus to perform APS. If the checking apparatus on the first receiving line card of the working entity discovers that the working entity fails, the checking apparatus notifies the slave protocol control apparatus on this line card through an interruption signal, and the slave protocol control apparatus uses an inter-card message to notify the master protocol control apparatus on the second receiving line card of the protection entity, and the master protocol control apparatus decides whether to perform switching. If the decision result indicates that APS is required, the master protocol control apparatus uses an inter-card message or an intra-card message to notify the selective transmitting apparatus or the discarding apparatus to perform APS.

### Embodiment 6

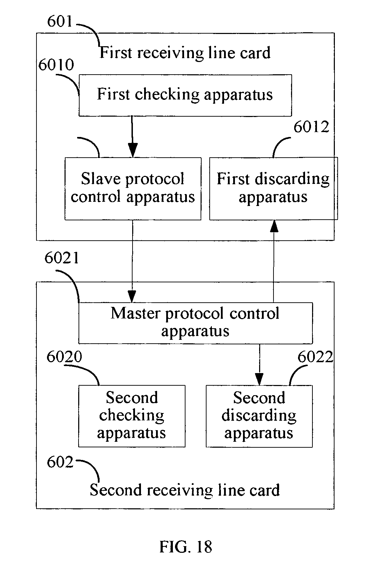

As shown in FIG. 18, a receiving device is disclosed in this embodiment. The receiving device includes:
a first receiving line card 601, connected to a working entity and adapted to: receive a continuity check message from a sending device, and send a check failure notification if no continuity check message is received within a preset time; and
a second receiving line card 602, connected to a protection entity and adapted to: receive a continuity check message from the sending device, and perform service switching if the continuity check message and the check failure notification of the first receiving line card 601 are received within a preset time.

Further, the first receiving line card 601 may include:
a first checking apparatus 6010, adapted to receive a continuity check message from the sending device;
a slave protocol control apparatus 6011, adapted to send a check failure notification when the first checking apparatus 6010 receives no continuity check message within the preset time; and
a first discarding apparatus 6012, adapted to set the state of the working entity in the forwarding table entries of the receiving device to a discarding state after receiving a switching notification from the second receiving line card 602.

Accordingly, the second receiving line card 602 includes:
a second checking apparatus 6020, adapted to receive a continuity check message from the sending device;
a master protocol control apparatus 6021, adapted to: receive a check failure notification from the first receiving line card 601, and send a switching notification when receiving a continuity check message and a check failure notification within the preset time; and
a second discarding apparatus 6022, adapted to set the state of the protection entity in the forwarding table entries of the receiving device to a receiving state after receiving a switching notification from the master protocol control apparatus 6021.

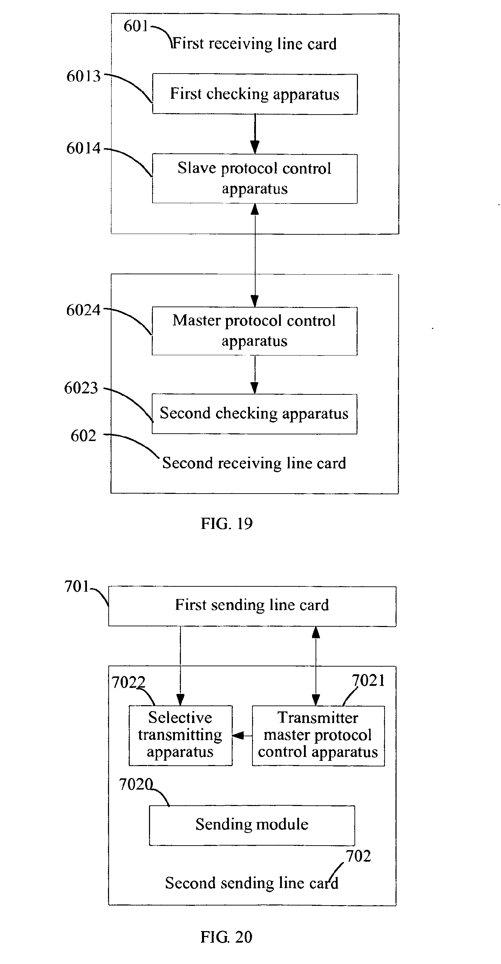

As shown in FIG. 19, the first receiving line card 601 may include:
a first checking apparatus 6013, adapted to receive a continuity check message from the sending device; and
a slave protocol control apparatus 6014, adapted to send a check failure notification when the first checking apparatus 6013 receives no continuity check message within the preset time.

Accordingly, the second receiving line card 602 may include:
a second checking apparatus 6023, adapted to receive a continuity check message from the sending device; and
a receiver master protocol control apparatus 6024, adapted to: receive a check failure notification from the first receiving line card 601, and send a switching notification to the sending device when receiving a continuity check message and a check failure notification within the preset time.

In the receiving device disclosed in this embodiment, the first receiving line card 601 and the second receiving line card 602 check arrival of continuity check messages sent by the sending device, and perform centralized switching control on the line cards automatically according to the check result, thus improving APS efficiency and reliability of a PS-based transport network.

### Embodiment 7

As shown in FIG. 20, a sending device is disclosed in this embodiment. The sending device includes:
a first sending line card 701, connected to a working entity and adapted to send a continuity check message; and
a second sending line card 702, connected to a protection entity and adapted to send a continuity check message.

Further, the second sending line card 702 may include:
a sending module 7020, adapted to send a continuity check message;
a transmitter master protocol control apparatus 7021, adapted to: resolve the switching notification after receiving the switching notification from the receiving device, and broadcast the resolved switching notification; and
a selective transmitting apparatus 7022, adapted to set the state of the protection entity in the forwarding table entries of the sending device to a sending state after receiving a switching notification broadcast by the transmitter master protocol control apparatus 7021.

The sending device disclosed in this embodiment sends continuity check messages to the receiving device, and performs APS on the line card automatically according to the check result of the receiving device, thus improving the timeliness of the APS.

All or part of the steps of the foregoing embodiments may be implemented by a software program. The software program may be stored in a computer-readable storage medium such as a hard disk, a floppy disk, and a compact disk of a computer.

Although the invention has been described through some exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims.

## Claims

1. A receiving device, adapted to perform Automatic Protection Switching, APS, in a packet switched transport network, the receiving device
comprising:
a first receiving line card (601, 121), connected to a working entity and adapted to: receive, from said working entity, a continuity check message sent from a sending device, and send a check failure notification if no continuity check message is received within a preset time; and
a second receiving line card (602, 122), connected to a protection entity and adapted to: receive, from said protection entity, a continuity check message sent from the sending device, and perform service switching if the continuity check message and the check failure notification of the first receiving line card (601, 121) are received within the preset time;**characterized in that**:
the first receiving line card (601, 121) comprises:
a first checking apparatus (6010, 1210), adapted to receive, from the working entity, the continuity check message sent from the sending device; and
a slave protocol control apparatus (6011, 1211), adapted to send the check failure notification when the first checking apparatus (6010, 1210) receives no continuity check message within the preset time; and
a first discarding apparatus (6012, 1212), adapted to set a state of the working entity in forwarding table entries of the receiving device to a discarding state after receiving an APS protocol message inclusive of a switching notification from the second receiving line card (602, 122);
and the second receiving line card (602, 122) comprises:
a second checking apparatus (6020, 1220), adapted to receive, from the protection entity, the continuity check message sent from the sending device;
a master protocol control apparatus (6021, 1221), adapted to: receive the check failure notification from the first receiving line card (601, 121), and send the switching notification when receiving the continuity check message and the check failure notification within the preset time; and
a second discarding apparatus (6022, 1222), adapted to set a state of the protection entity in the forwarding table entries of the receiving device to a receiving state after receiving the switching notification from the master protocol control apparatus (6021, 1221).

2. The receiving device of claim 1, wherein the slave protocol control apparatus (6011, 1211) is further adapted to send a state message to the second receiving line card (602, 122) periodically, and, when no state message is received from the second receiving line card (602, 122) within at least one period, set the state of the working entity in the forwarding table entries of the receiving device to a receiving state and set the state of the protection entity to a discarding state.

3. An Automatic Protection Switching, APS, system, adapted to perform APS protection in a packet switched transport network, the system comprising a sending device (11) and a receiving device (12), wherein:
the sending device (11) comprises:
a first sending line card (111), connected to a working entity and adapted to send a continuity check message to said working entity; and
a second sending line card (112), connected to a protection entity and adapted to send a continuity check message to said protection entity;
and the receiving device (12) comprises:
a first receiving line card (121), connected to the working entity and adapted to: receive, from the working entity, the continuity check message sent from the sending device (11), and send a check failure notification if no continuity check message is received within a preset time; and
a second receiving line card (122), connected to the protection entity and adapted to: receive, from the protection entity, the continuity check message sent from the sending device (11), and perform service switching if the continuity check message and the check failure notification of the first receiving line card (121) are received within the preset time;**characterized in that**:
the first receiving line card (121) comprises:
a first checking apparatus (1210), adapted to receive, from the working entity, the continuity check message sent from the sending device (11);
a slave protocol control apparatus (1211), adapted to send the check failure notification when the first checking apparatus (1210) receives no continuity check message within the preset time; and
a first discarding apparatus (1212), adapted to set a state of the working entity in forwarding table entries of the receiving device (12) to a discarding state after receiving an APS protocol message inclusive of a switching notification from the second receiving line card (122);
and the second receiving line card (122) comprises:
a second checking apparatus (1220), adapted to receive, from the protection entity, the continuity check message sent from the sending device (11);
a master protocol control apparatus (1221), adapted to: receive the check failure notification from the first receiving line card (121), and send the switching notification when receiving the continuity check message and the check failure notification within the preset time; and
a second discarding apparatus (1222), adapted to set a state of the protection entity in the forwarding table entries of the receiving device (12) to a receiving state after receiving the switching notification from the master protocol control apparatus (1221).

4. The APS system of claim 3, wherein
the slave protocol control apparatus (1211) further comprises: a slave protocol control module (1211a), adapted to: send a state message to the second receiving line card (122) periodically, and, when no state message is received from the second receiving line card (122) within at least one period, set the state of the working entity in the forwarding table entries of the receiving device (12) to the receiving state and set the state of the protection entity to the discarding state; and
the master protocol control apparatus (1221) further comprises: a master protocol control module (1221a), adapted to send the state message to the first receiving line card (121) periodically.

5. An Automatic Protection Switching, APS, system, adapted to perform APS in a packet switched transport network, the system comprising a sending device (11) and a receiving device (12), wherein:
the sending device (11) comprises:
a first sending line card (111), connected to a working entity and adapted to send a continuity check message to said working entity; and
a second sending line card (112), connected to a protection entity and adapted to send a continuity check message to said protection entity;
and the receiving device (12) comprises:
a first receiving line card (121), connected to the working entity and adapted to: receive, from the working entity, the continuity check message sent from the sending device (11), and send a check failure notification if no continuity check message is received within a preset time; and
a second receiving line card (122), connected to the protection entity and adapted to: receive, from the protection entity, the continuity check message sent from the sending device (11), and perform service switching if the continuity check message and the check failure notification of the first receiving line card (121) are received within the preset time;
**characterized in that**:
the first receiving line card (121) comprises:
a first checking apparatus (1213), adapted to receive, from the working entity, the continuity check message sent from the sending device (11); and
a slave protocol control apparatus (1214), adapted to send the check failure notification when the first checking apparatus (1213) receives no continuity check message within the preset time;
the second receiving line card (122) comprises:
a second checking apparatus (1223), adapted to receive, from the protection entity, the continuity check message sent from the sending device (11); and
a receiver master protocol control apparatus (1224), adapted to: receive the check failure notification from the first receiving line card (121), and send an APS protocol message inclusive of a switching notification to the second sending line card (112) of the sending device (11) when receiving the continuity check message and the check failure notification within the preset time;
and the second sending line card (112) comprises:
a sending module (1120), adapted to send the continuity check message;
a transmitter master protocol control apparatus (1121), adapted to: resolve the APS protocol message to obtain the switching notification after receiving the APS protocol message inclusive the switching notification from the receiving device (12), and broadcast the resolved switching notification; and
a selective transmitting apparatus (1122), adapted to set a state of the protection entity in the forwarding table entries of the sending device (11) to a sending state after receiving the switching notification broadcast by the transmitter master protocol control apparatus (1121).

6. The APS system of claim 5, wherein
the slave protocol control apparatus (1214) further comprises: a slave protocol control module (1214a), adapted to: send a state message to the second receiving line card (122) periodically, and, when no state message is received from the second receiving line card (122) within at least one period, send a switching update notification to the second sending line card (112);
the receiver master protocol control apparatus (1224) further comprises: a master protocol control module (1224a), adapted to send the state message to the first receiving line card (121) periodically;
the transmitter master protocol control apparatus (1121) is further adapted to: resolve the switching update notification after receiving the switching update notification from the receiving device (12), and broadcast the resolved switching update notification; and
the selective transmitting apparatus (1122) is further adapted to set the state of the protection entity in the forwarding table entries of the sending device (11) to a non-sending state after receiving the switching update notification broadcast by the transmitter master protocol control apparatus (1121).

7. The APS system of claim 5, wherein the first sending line card (111) further comprises:
a slave protocol control module (1110), adapted to: send the state message to the second sending line card (112) periodically, and, when no state message is received from the second sending line card (112) within at least one period, notify the selective transmitting apparatus (1122) to set the state of the working entity in the forwarding table entries of the sending device (11) to the sending state; and
the transmitter master protocol control apparatus (1121) of the second sending line card (111) is further adapted to send the state message to the first sending line card (112) periodically.

8. An Automatic Protection Switching, APS, method for performing APS protection in a packet switched transport network, the method comprising:
checking, by a first receiving line card (121) and a second receiving line card (122) at a receiver (12), whether a continuity check message is received from a transmitter (11); and
performing service switching if the first receiving line card (121) does not receive the continuity check message but the second receiving line card (122) receives the continuity check message within a preset time; the method being **characterized in that** the service switching comprises
sending, by the second receiving line card (122), an APS protocol message inclusive of a switching notification to the first receiving line card (121), and setting a state of a protection entity corresponding to the second receiving line card (122) in receiver forwarding table entries to a receiving state; and
setting, by the first receiving line card (121) after receiving the switching notification, a state of a working entity corresponding to the first receiving line card (121) in the receiver forwarding table entries to a discarding state.

9. The APS method of claim 8, further comprising:
sending, by the first receiving line card (121) and the second receiving line card (122), a state message to each other periodically; and
setting, by the first receiving line card (121), the state of the working entity corresponding to the first receiving line card (121) in the receiver forwarding table entries to the receiving state and setting the state of the protection entity corresponding to the second receiving line card (122) to the discarding state if no state message is received from the second receiving line card (122) within at least one period.

10. An Automatic Protection Switching, APS, method for performing APS protection in a packet switched transport network, the method , comprising:
checking, by a first receiving line card (121) and a second receiving line card (122) at a receiver, whether a continuity check message is received from a transmitter; and
performing service switching if the first receiving line card (121) does not receive the continuity check message but the second receiving line card (122) receives the continuity check message within a preset time;
**characterized in that**, the service switching comprises:
sending, by the second receiving line card (122) an APS protocol message inclusive of a switching notification to the second sending line card (112); and
setting, by the second sending line card (112) after receiving the switching notification, a state of a protection entity corresponding to the second sending line card (112) in transmitter forwarding table entries to a sending state.

11. The APS method according to claim 10, further comprising:
sending, by the first receiving line card (121) and the second receiving line card (122), a state message to each other periodically;
sending, by the first receiving line card (121), a switching update notification to the second sending line card (112), when no state message is received from the second receiving line card (122) within at least one period;
setting, by the second sending line card (112), the state of the protection entity in the transmitter forwarding table entries to a non-sending state after receiving the switching update notification.

12. The APS method according to claim 10, further comprising:
sending, by the first sending line card (111) and the second sending line card (112), a state message to each other periodically;
setting, by the first sending line card (111), the state of the working entity corresponding to the first sending line card (111) in the transmitter forwarding table entries to the sending state, if no
state message is received from the second sending line card (112) within at least one period.

## Patentansprüche

1. Empfangseinrichtung, die dafür ausgelegt ist, automatische Schutzumschaltung APS in einem paketvermittelten Transportnetzwerk durchzuführen, wobei die Empfangseinrichtung Folgendes umfasst:
eine erste Empfangs-Leitungskarte (601, 121), die mit einer Arbeitsentität verbunden und für Folgendes ausgelegt ist:
Empfangen einer von einer Sendeeinrichtung gesendeten Kontinuitätsprüfnachricht von der Arbeitsentität und Senden einer Prüf-Fehlschlagsbenachrichtigung, wenn innerhalb einer voreingestellten Zeit keine Kontinuitätsprüfnachricht empfangen wird; und
eine zweite Empfangs-Leitungskarte (602, 122), die mit einer Schutzentität verbunden und für Folgendes ausgelegt ist:
Empfangen einer von der Sendeeinrichtung gesendeten Kontinuitätsprüfnachricht von der Schutzentität und Durchführen von Dienstumschaltung, wenn die Kontinuitätsprüfnachricht und die Prüf-Fehlschlagsbenachrichtigung der ersten Empfangs-Leitungskarte (601, 121) innerhalb der voreingestellten Zeit empfangen werden, **dadurch gekennzeichnet, dass**
die erste Empfangs-Leitungskarte (601, 121) Folgendes umfasst:
eine erste Prüfvorrichtung (6010, 1210), die dafür ausgelegt ist, von der Arbeitsentität die von der Sendeeinrichtung gesendete Kontinuitätsprüfnachricht zu empfangen; und
eine Slave-Protokoll-Steuervorrichtung (6011, 1211), die dafür ausgelegt ist, die Prüf-Fehlschlagsbenachrichtigung zu senden, wenn die erste Prüfvorrichtung (6010, 1210) innerhalb der voreingestellten Zeit keine Kontinuitätsprüfnachricht empfängt; und
eine erste Verwerfungsvorrichtung (6012, 1212), die dafür ausgelegt ist, einen Zustand der Arbeitsentität in Weiterleitungstabelleneinträgen der Empfangseinrichtung auf einen Verwerfungszustand zu setzen, nachdem eine APS-Protokollnachricht, die eine Umschaltbenachrichtigung umfasst, von der zweiten Empfangs-Leitungskarte (602, 122) empfangen wird;
und die zweite Empfangs-Leitungskarte (602, 122) Folgendes umfasst:
eine zweite Prüfvorrichtung (6020, 1220), die dafür ausgelegt ist, von der Schutzentität die von der Sendeeinrichtung gesendete Kontinuitätsprüfnachricht zu empfangen;
eine Master-Protokoll-Steuervorrichtung (6021, 1221), die für Folgendes ausgelegt ist: Empfangen der Prüf-Fehlschlagsbenachrichtigung von der ersten Empfangs-Leitungskarte (601, 121) und Senden der Umschaltbenachrichtigung, wenn die Kontinuitätsprüfnachricht und die Prüf-Fehlschlagsbenachrichtigung innerhalb der voreingestellten Zeit empfangen werden; und
eine zweite Verwerfungsvorrichtung (6022, 1222), die dafür ausgelegt ist, einen Zustand der Schutzentität in den Weiterleitungstabelleneinträgen der Empfangseinrichtung auf einen Empfangszustand zu setzen, nachdem die Umschaltbenachrichtigung von der Master-Protokoll-Steuervorrichtung (6021, 1221) empfangen wird.

2. Empfangseinrichtung nach Anspruch 1, wobei die Slave-Protokoll-Steuervorrichtung (6011, 1211) ferner dafür ausgelegt ist, periodisch eine Zustandsnachricht zu der zweiten Empfangs-Leitungskarte (602, 122) zu senden und wenn innerhalb mindestens einer Periode keine Zustandsnachricht von der zweiten Empfangs-Leitungskarte (602, 122) empfangen wird, den Zustand der Arbeitsentität in den Weiterleitungstabelleneinträgen der Empfangseinrichtung auf einen Empfangszustand zu setzen und den Zustand der Schutzentität auf einen Verwerfungszustand zu setzen.

3. System zur automatischen Schutzumschaltung APS, das dafür ausgelegt ist, APS-Schutz in einem paketvermittelten Transportnetzwerk durchzuführen, wobei das System eine Sendeeinrichtung (11) und eine Empfangseinrichtung (12) umfasst, wobei
die Sendeeinrichtung (11) Folgendes umfasst:
eine erste Sende-Leitungskarte (111), die mit einer Arbeitsentität verbunden und dafür ausgelegt ist, eine Kontinuitätsprüfnachricht zu der Arbeitsentität zu senden; und
eine zweite Sende-Leitungskarte (112), die mit einer Schutzentität verbunden und dafür ausgelegt ist, eine Kontinuitätsprüfnachricht zu der Schutzentität zu senden; und die Empfangseinrichtung (12) Folgendes umfasst:
eine erste Empfangs-Leitungskarte (121), die mit der Arbeitsentität verbunden und für Folgendes ausgelegt ist:
Empfangen der von der Sendeeinrichtung (11) gesendeten Kontinuitätsprüfnachricht von der Arbeitsentität und Senden einer Prüf-Fehlschlagsbenachrichtigung, wenn innerhalb einer voreingestellten Zeit keine Kontinuitätsprüfnachricht empfangen wird; und
eine zweite Empfangs-Leitungskarte (122), die mit der Schutzentität verbunden und für Folgendes ausgelegt ist: Empfangen der von der Sendeeinrichtung (11) gesendeten Kontinuitätsprüfnachricht von der Schutzentität und Durchführen von Dienstumschaltung, wenn die Kontinuitätsprüfnachricht und die Prüf-Fehlschlagsbenachrichtigung der ersten Empfangs-Leitungskarte (121) innerhalb der voreingestellten Zeit empfangen werden; **dadurch gekennzeichnet, dass** die erste Empfangs-Leitungskarte (121) Folgendes umfasst:
eine erste Prüfvorrichtung (1210), die dafür ausgelegt ist, von der Arbeitsentität die von der Sendeeinrichtung (11) gesendete Kontinuitätsprüfnachricht zu empfangen; eine Slave-Protokoll-Steuervorrichtung (1211), die dafür ausgelegt ist, die Prüf-Fehlschlagsbenachrichtigung zu senden, wenn die erste Prüfvorrichtung (1210) innerhalb der voreingestellten Zeit keine Kontinuitätsprüfnachricht empfängt; und eine erste Verwerfungsvorrichtung (1212), die dafür ausgelegt ist, einen Zustand der Arbeitsentität in Weiterleitungstabelleneinträgen der Empfangseinrichtung (12) auf einen Verwerfungszustand zu setzen, nachdem eine APS-Protokollnachricht, die eine Umschaltbenachrichtigung umfasst, von der zweiten Empfangs-Leitungskarte (122) empfangen wird;
und die zweite Empfangs-Leitungskarte (122) Folgendes umfasst:
eine zweite Prüfvorrichtung (1220), die dafür ausgelegt ist, von der Schutzentität die von der Sendeeinrichtung (11) gesendete Kontinuitätsprüfnachricht zu empfangen;
eine Master-Protokoll-Steuervorrichtung (1221), die für Folgendes ausgelegt ist:
Empfangen der Prüf-Fehlschlagsbenachrichtigung von der ersten Empfangs-Leitungskarte (121) und Senden der Umschaltbenachrichtigung, wenn die Kontinuitätsprüfnachricht und die Prüf-Fehlschlagsbenachrichtigung innerhalb der voreingestellten Zeit empfangen werden; und
eine zweite Verwerfungsvorrichtung (1222), die dafür ausgelegt ist, einen Zustand der Schutzentität in den Weiterleitungstabelleneinträgen der Empfangseinrichtung (12) auf einen Empfangszustand zu setzen, nachdem die Umschaltbenachrichtigung von der Master-Protokoll-Steuervorrichtung (1221) empfangen wird.

4. APS-System nach Anspruch 3, wobei
die Slave-Protokoll-Steuervorrichtung (1211) ferner Folgendes umfasst: ein Slave-Protokoll-Steuermodul (1211a), das für Folgendes ausgelegt ist: periodisches Senden einer Zustandsnachricht zu der zweiten Empfangs-Leitungskarte (122) und wenn innerhalb mindestens einer Periode keine Zustandsnachricht von der zweiten Empfangs-Leitungskarte (122) empfangen wird, Setzen des Zustands der Arbeitsentität in den Weiterleitungstabelleneinträgen der Empfangseinrichtung (12) auf den Empfangszustand und Setzen des Zustands der Schutzentität auf den Verwerfungszustand; und
die Master-Protokoll-Steuervorrichtung (1221) ferner Folgendes umfasst: ein Master-Protokoll-Steuermodul (1221a), das dafür ausgelegt ist, die Zustandsnachricht periodisch zu der ersten Empfangs-Leitungskarte (121) zu senden.

5. System zur automatischen Schutzumschaltung APS, das dafür ausgelegt ist, APS in einem paketvermittelten Transportnetzwerk durchzuführen, wobei das System eine Sendeeinrichtung (11) und eine Empfangseinrichtung (12) umfasst, wobei die Sendeeinrichtung (11) Folgendes umfasst:
eine erste Sende-Leitungskarte (111), die mit einer Arbeitsentität verbunden und dafür ausgelegt ist, eine Kontinuitätsprüfnachricht zu der Arbeitsentität zu senden; und
eine zweite Sende-Leitungskarte (112), die mit einer Schutzentität verbunden und dafür ausgelegt ist, eine Kontinuitätsprüfnachricht zu der Schutzentität zu senden; und die Empfangseinrichtung (12) Folgendes umfasst:
eine erste Empfangs-Leitungskarte (121), die mit der Arbeitsentität verbunden und für Folgendes ausgelegt ist: Empfangen der von der Sendeeinrichtung (11) gesendeten Kontinuitätsprüfnachricht von der Arbeitsentität und Senden einer Prüf-Fehlschlagsbenachrichtigung, wenn innerhalb einer voreingestellten Zeit keine Kontinuitätsprüfnachricht empfangen wird; und
eine zweite Empfangs-Leitungskarte (122), die mit der Schutzentität verbunden und für Folgendes ausgelegt ist: Empfangen der von der Sendeeinrichtung (11) gesendeten Kontinuitätsprüfnachricht von der Schutzentität und Durchführen von Dienstumschaltung, wenn die Kontinuitätsprüfnachricht und die Prüf-Fehlschlagsbenachrichtigung der ersten Empfangs-Leitungskarte (121) innerhalb der voreingestellten Zeit empfangen werden;
**dadurch gekennzeichnet, dass**
die erste Empfangs-Leitungskarte (121) Folgendes umfasst:
eine erste Prüfvorrichtung (1213), die dafür ausgelegt ist, von der Arbeitsentität die von der Sendeeinrichtung (11) gesendete Kontinuitätsprüfnachricht zu empfangen; und
eine Slave-Protokoll-Steuervorrichtung (1214), die dafür ausgelegt ist, die Prüf-Fehlschlagsbenachrichtigung zu senden, wenn die erste Prüfvorrichtung (1213) innerhalb der voreingestellten Zeit keine Kontinuitätsprüfnachricht empfängt;
die zweite Empfangs-Leitungskarte (122) Folgendes umfasst:
eine zweite Prüfvorrichtung (1223), die dafür ausgelegt ist, von der Schutzentität die von der Sendeeinrichtung (11) gesendete Kontinuitätsprüfnachricht zu empfangen; und
eine Empfänger-Master-Protokoll-Steuervorrichtung (1224), die für Folgendes ausgelegt ist: Empfangen der Prüf-Fehlschlagsbenachrichtigung von der ersten Empfangs-Leitungskarte (121) und Senden einer APS-Protokollnachricht, die eine Umschaltbenachrichtigung umfasst, zu der zweiten Sende-Leitungskarte (112) der Sendeeinrichtung (11), wenn die Kontinuitätsprüfnachricht und die Prüf-Fehlschlagsbenachrichtigung innerhalb der voreingestellten Zeit empfangen werden;
und die zweite Sende-Leitungskarte (112) Folgendes umfasst:
ein Sendemodul (1120), das dafür ausgelegt ist, die Kontinuitätsprüfnachricht zu senden;
eine Sender-Master-Protokoll-Steuervorrichtung (1121), die für Folgendes ausgelegt ist: Auflösen der APS-Protokollnachricht, um die Umschaltbenachrichtigung zu erhalten, nachdem die APS-Protokollnachricht, die die Umschaltbenachrichtigung umfasst, von der Empfangseinrichtung (12) empfangen wird, und Rundsenden der aufgelösten Umschaltbenachrichtigung; und
eine selektive Sendevorrichtung (1122), die dafür ausgelegt ist, einen Zustand der Schutzentität in den Weiterleitungstabelleneinträgen der Sendeeinrichtung (11) auf einen Sendezustand zu setzen, nachdem die durch die Sender-Master-Protokoll-Steuervorrichtung (1121) rundgesendete Umschaltbenachrichtigung empfangen wird.

6. APS-System nach Anspruch 5, wobei
die Slave-Protokoll-Steuervorrichtung (1214) ferner Folgendes umfasst: ein Slave-Protokoll-Steuermodul (1214a), das für Folgendes ausgelegt ist: periodisches Senden einer Zustandsnachricht zu der zweiten Empfangs-Leitungskarte (122) und wenn innerhalb mindestens einer Periode keine Zustandsnachricht von der zweiten Empfangs-Leitungskarte (122) empfangen wird, Senden einer Umschaltaktualisierungsbenachrichtigung zu der zweiten Sende-Leitungskarte (112); die Empfänger-Master-Protokoll-Steuervorrichtung (1224) ferner Folgendes umfasst:
ein Master-Protokoll-Steuermodul (1224a), das dafür ausgelegt ist, die Zustandsnachricht periodisch zu der ersten Empfangs-Leitungskarte (121) zu senden;
die Sender-Master-Protokoll-Steuervorrichtung (1121) ferner für Folgendes ausgelegt ist: Auflösen der Umschaltaktualisierungsbenachrichtigung nach dem Empfang der Umschaltaktualisierungsbenachrichtigung von der Empfangseinrichtung (12) und Rundsenden der aufgelösten Umschaltaktualisierungsbenachrichtigung; und
die selektive Sendevorrichtung (1122) ferner dafür ausgelegt ist, den Zustand der Schutzentität in den Weiterleitungstabelleneinträgen der Sendeeinrichtung (11) auf einen Nicht-Sendezustand zu setzen, nachdem die durch die Sender-Master-Protokoll-Steuervorrichtung (1121) rundgesendete Umschaltaktualisierungsbenachrichtigung empfangen wird.

7. APS-System nach Anspruch 5, wobei die erste Sende-Leitungskarte (111) ferner Folgendes umfasst:
ein Slave-Protokoll-Steuermodul (1110), das für Folgendes ausgelegt ist: periodisches Senden der Zustandsnachricht zu der zweiten Sende-Leitungskarte (112) und wenn innerhalb mindestens einer Periode keine Zustandsnachricht von der zweiten Sende-Leitungskarte (112) empfangen wird, Benachrichtigen der selektiven Sendevorrichtung (1122), den Zustand der Arbeitsentität in den Weiterleitungstabelleneinträgen der Sendeeinrichtung (11) auf den Sendezustand zu setzen; und
die Sender-Master-Protokoll-Steuervorrichtung (1121) der zweiten Sende-Leitungskarte (111) ferner dafür ausgelegt ist, die Zustandsnachricht periodisch zu der ersten Sende-Leitungskarte (112) zu senden.

8. Verfahren zur automatischen Schutzumschaltung APS zum Durchführen von APS-Schutz in einem paketvermittelten Transportnetzwerk, wobei das Verfahren Folgendes umfasst:
Prüfen durch eine erste Empfangs-Leitungskarte (121) und eine zweite Empfangs-Leitungskarte (122) in einem Empfänger (12), ob eine Kontinuitätsprüfnachricht von einem Sender (11) empfangen wird; und
Durchführen von Dienstumschaltung, wenn die erste Empfangs-Leitungskarte (121) innerhalb einer voreingestellten Zeit die Kontinuitätsprüfnachricht nicht empfängt,
aber die zweite Empfangs-Leitungskarte (122) die Kontinuitätsprüfnachricht empfängt; wobei das Verfahren **dadurch gekennzeichnet ist, dass** die Dienstumschaltung Folgendes umfasst:
Senden einer APS-Protokollnachricht, die eine Umschaltbenachrichtigung umfasst, durch die zweite Empfangs-Leitungskarte (122) zu der ersten Empfangs-Leitungskarte (121) und Setzen eines Zustands einer Schutzentität, die der zweiten Empfangs-Leitungskarte (122) entspricht, in Empfängerweiterleitungstabelleneinträgen auf einen Empfangszustand; und
Setzen eines Zustands einer Arbeitsentität, die der ersten Empfangs-Leitungskarte (121) entspricht, durch die erste Empfangs-Leitungskarte (121) nach dem Empfang der Umschaltbenachrichtigung in den Empfängerweiterleitungstabelleneinträgen auf einen Verwerfungszustand.

9. APS-Verfahren nach Anspruch 8, ferner umfassend:
periodisches Senden einer Zustandsnachricht durch die erste Empfangs-Leitungskarte (121) und die zweite Empfangs-Leitungskarte (122) zueinander; und
Setzen des Zustands der Arbeitsentität, die der ersten Empfangs-Leitungskarte (121) entspricht, durch die erste Empfangs-Leitungskarte (121) in den Empfängerweiterleitungstabelleneinträgen auf den Empfangszustand und Setzen des Zustands der Schutzentität, die der zweiten Empfangs-Leitungskarte (122) entspricht,
auf den Verwerfungszustand, wenn innerhalb mindestens einer Periode keine Zustandsnachricht von der zweiten Empfangs-Leitungskarte (122) empfangen wird.

10. Verfahren zur automatischen Schutzumschaltung APS zum Durchführen von APS-Schutz in einem paketvermittelten Transportnetzwerk, wobei das Verfahren Folgendes umfasst:
Prüfen durch eine erste Empfangs-Leitungskarte (121) und eine zweite Empfangs-Leitungskarte (122) in einem Empfänger, ob eine Kontinuitätsprüfnachricht von einem Sender empfangen wird; und
Durchführen von Dienstumschaltung, wenn die erste Empfangs-Leitungskarte (121) innerhalb einer voreingestellten Zeit die Kontinuitätsprüfnachricht nicht empfängt,
aber die zweite Empfangs-Leitungskarte (122) die Kontinuitätsprüfnachricht empfängt;
**dadurch gekennzeichnet, dass** die Dienstumschaltung Folgendes umfasst:
Senden einer APS-Protokollnachricht, die eine Umschaltbenachrichtigung umfasst, durch die zweite Empfangs-Leitungskarte (122) zu der zweiten Sende-Leitungskarte (112); und
Setzen eines Zustands einer Schutzentität, die der zweiten Sende-Leitungskarte (112) entspricht, durch die zweite Sende-Leitungskarte (112) nach dem Empfang der Umschaltbenachrichtigung in Senderweiterleitungstabelleneinträgen auf einen Sendezustand.

11. APS-Verfahren nach Anspruch 10, ferner umfassend:
periodisches Senden einer Zustandsnachricht durch die erste Empfangs-Leitungskarte (121) und die zweite Empfangs-Leitungskarte (122) zueinander;
Senden einer Umschaltaktualisierungsbenachrichtigung durch die erste Empfangs-Leitungskarte (121) zu der zweiten Sende-Leitungskarte (112), wenn innerhalb mindestens einer Periode keine Zustandsnachricht von der zweiten Empfangs-Leitungskarte (122) empfangen wird;
Setzen des Zustands der Schutzentität durch die zweite Sende-Leitungskarte (112) in den Senderweiterleitungstabelleneinträgen auf einen Nicht-Sendezustand nach dem Empfang der Umschaltaktualisierungsbenachrichtigung.

12. APS-Verfahren nach Anspruch 10, ferner umfassend:
periodisches Senden einer Zustandsnachricht durch die erste Sende-Leitungskarte (111) und die zweite Sende-Leitungskarte (112) zueinander;
Setzen des Zustands der Arbeitsentität, die der ersten Sende-Leitungskarte (111) entspricht, durch die erste Sende-Leitungskarte (111) in den Senderweiterleitungstabelleneinträgen auf den Sendezustand, wenn innerhalb mindestens einer Periode keine Zustandsnachricht von der zweiten Sende-Leitungskarte (112) empfangen wird.

## Revendications

1. Dispositif récepteur, adapté pour effectuer une Commutation de Protection Automatique, APS, dans un réseau de transport à commutation de paquets, le dispositif récepteur comprenant :
une première carte de ligne réceptrice (601, 121), connectée à une entité opérationnelle et adaptée pour : recevoir, depuis ladite entité opérationnelle, un message de vérification de continuité envoyé par un dispositif d'envoi, et envoyer une notification d'échec de vérification si aucun message de vérification de continuité n'est reçu dans un délai préétabli ; et
une seconde carte de ligne réceptrice (602, 122), connectée à une entité de protection et adaptée pour : recevoir, depuis ladite entité de protection, un message de vérification de continuité envoyé par le dispositif d'envoi, et exécuter une commutation de service si le message de vérification de continuité et la notification d'échec de vérification de la première carte de ligne réceptrice (601, 121) sont reçus dans le délai préétabli ; **caractérisé en ce que** :
la première carte de ligne réceptrice (601, 121) comprend :
un premier appareil de vérification (6010, 1210), adapté pour recevoir, depuis l'entité opérationnelle, le message de vérification de continuité envoyé par le dispositif d'envoi ; et
un appareil de contrôle de protocole asservi (6011, 1211), adapté pour envoyer la notification d'échec de vérification quand le premier appareil de vérification (6010, 1210) ne reçoit pas de message de vérification de continuité dans le délai préétabli ; et
un premier appareil de rejet (6012, 1212), adapté pour régler un état de l'entité opérationnelle dans des entrées de table de réacheminement du dispositif récepteur sur un état de rejet après réception d'un message de protocole APS comportant une notification de commutation depuis la seconde carte de ligne réceptrice (602, 122) ;
et la seconde carte de ligne réceptrice (602, 122) comprend :
un second appareil de vérification (6020, 1220), adapté pour recevoir, depuis l'entité de protection, le message de vérification de continuité envoyé par le dispositif d'envoi;
un appareil de contrôle de protocole maître (6021, 1221), adapté pour : recevoir la notification d'échec de vérification depuis la première carte de ligne réceptrice (601, 121), et envoyer la notification de commutation à la réception du message de vérification de continuité et de la notification d'échec de vérification dans le délai préétabli ; et
un second appareil de rejet (6022, 1222), adapté pour régler un état de l'entité de protection dans des entrées de table de réacheminement du dispositif récepteur sur un état de réception après réception de la notification de commutation depuis l'appareil de contrôle de protocole maître (6021, 1221).

2. Dispositif récepteur selon la revendication 1, dans lequel l'appareil de contrôle de protocole asservi (6011, 1211) est adapté en outre pour envoyer périodiquement un message d'état à la seconde carte de ligne réceptrice (602, 122), et, quand aucun message d'état n'est reçu depuis la seconde carte de ligne réceptrice (602, 122) dans au moins une période, régler l'état de l'entité opérationnelle dans les entrées de table de réacheminement du dispositif de réception sur un état de réception et régler l'état de l'entité de protection sur un état de rejet.

3. Système de Commutation de Protection Automatique, APS, adapté pour effectuer une protection APS dans un réseau de transport à commutation de paquets, le système comprenant un dispositif d'envoi (11) et un dispositif récepteur (12), dans lequel :
le dispositif d'envoi (11) comprend :
une première carte de ligne d'envoi (111), connectée à une entité opérationnelle et adaptée pour envoyer un message de vérification de continuité à ladite entité opérationnelle ; et
une seconde carte de ligne d'envoi (112), connectée à une entité de protection et adaptée pour envoyer un message de vérification de continuité à ladite entité de protection ;
et le dispositif récepteur (12) comprend :
une première carte de ligne réceptrice (121), connectée à l'entité opérationnelle et adaptée pour : recevoir, depuis l'entité opérationnelle, le message de vérification de continuité envoyé par le dispositif d'envoi (11), et envoyer une notification d'échec de vérification si aucun message de vérification de continuité n'est reçu dans un délai préétabli ; et
une seconde carte de ligne réceptrice (122), connectée à l'entité de protection et adaptée pour : recevoir, depuis l'entité de protection, un message de vérification de continuité envoyé par le dispositif d'envoi (11), et exécuter une commutation de service si le message de vérification de continuité et la notification d'échec de vérification de la première carte de ligne réceptrice (121) sont reçus dans le délai préétabli, **caractérisé en ce que** :
la première carte de ligne réceptrice (121) comprend :
un premier appareil de vérification (1210), adapté pour recevoir, depuis l'entité opérationnelle, le message de vérification de continuité envoyé par le dispositif d'envoi (11) ; et
un appareil de contrôle de protocole asservi (1211), adapté pour envoyer la notification d'échec de vérification quand le premier appareil de vérification (1210) ne reçoit pas de message de vérification de continuité dans le délai préétabli ; et
un premier appareil de rejet (1212), adapté pour établir un état de l'entité opérationnelle dans des entrées de table de réacheminement du dispositif récepteur (12) sur un état de rejet après réception d'un message de protocole APS comportant une notification de commutation depuis la seconde carte de ligne réceptrice (122) ;
et la seconde carte de ligne réceptrice (122) comprend :
un second appareil de vérification (1220), adapté pour recevoir, depuis l'entité de protection, le message de vérification de continuité envoyé par le dispositif d'envoi (11) ;
un appareil de contrôle de protocole maître (1221), adapté pour : recevoir la notification d'échec de vérification depuis la première carte de ligne réceptrice (121),
et envoyer la notification de commutation à la réception du message de vérification de continuité et de la notification d'échec de vérification dans le délai préétabli ; et
un second appareil de rejet (1222), adapté pour régler un état de l'entité de protection dans les entrées de table de réacheminement du dispositif récepteur (12) sur un état de réception après réception de la notification de commutation depuis l'appareil de contrôle de protocole maître (1221).

4. Système APS selon la revendication 3, dans lequel
l'appareil de contrôle de protocole asservi (1211) comprend en outre : un module de contrôle de protocole asservi (1211a), adapté pour : envoyer périodiquement un message d'état à la seconde carte de ligne réceptrice (122), et, quand aucun message d'état n'est reçu depuis la seconde carte de ligne réceptrice (122) dans au moins une période, régler l'état de l'entité opérationnelle dans les entrées de table de réacheminement du dispositif récepteur (12) sur l'état de réception et régler l'état de l'entité de protection sur l'état de rejet ; et
l'appareil de contrôle de protocole maître (1221) comprend en outre : un module de contrôle de protocole maître (1221a), adapté pour envoyer périodiquement le message d'état à la première carte de ligne réceptrice (121).

5. Système de Commutation de Protection Automatique, APS, adapté pour exécuter une APS dans un réseau de transport à commutation de paquets, le système comprenant un dispositif d'envoi (11) et un dispositif récepteur (12), dans lequel :
le dispositif d'envoi (11) comprend :
une première carte de ligne d'envoi (111), connectée à une entité opérationnelle et adaptée pour envoyer un message de vérification de continuité à ladite entité opérationnelle ; et
une seconde carte de ligne d'envoi (112), connectée à une entité de protection et
adaptée pour envoyer un message de vérification de continuité à ladite entité de protection ;
et le dispositif récepteur (12) comprend :
une première carte de ligne réceptrice (121), connectée à l'entité opérationnelle et adaptée pour : recevoir, depuis l'entité opérationnelle, le message de vérification de continuité envoyé par le dispositif d'envoi (11), et envoyer une notification d'échec de vérification si aucun message de vérification de continuité n'est reçu dans un délai préétabli ; et
une seconde carte de ligne réceptrice (122), connectée à l'entité de protection et adaptée pour : recevoir, depuis l'entité de protection, un message de vérification de continuité envoyé par le dispositif d'envoi (11), et exécuter une commutation de service si le message de vérification de continuité et la notification d'échec de vérification de la première carte de ligne réceptrice (121) sont reçus dans le délai préétabli ;
**caractérisé en ce que** :
la première carte de ligne réceptrice (121) comprend :
un premier appareil de vérification (1213), adapté pour recevoir, depuis l'entité opérationnelle, le message de vérification de continuité envoyé par le dispositif d'envoi (11) ; et
un appareil de contrôle de protocole asservi (1214), adapté pour envoyer la notification d'échec de vérification quand le premier appareil de vérification (1213) ne reçoit pas de message de vérification de continuité dans le délai préétabli ;
la seconde carte de ligne réceptrice (122) comprend :
un second appareil de vérification (1223), adapté pour recevoir, depuis l'entité de protection, le message de vérification de continuité envoyé par le dispositif d'envoi (11) ; et
un appareil de contrôle de protocole maître récepteur (1224), adapté pour : recevoir la notification d'échec de vérification depuis la première carte de ligne réceptrice (121),
et envoyer un message de protocole APS comportant une notification de commutation à la seconde carte de ligne d'envoi (112) du dispositif d'envoi (11) à la réception du message de vérification de continuité et de la notification d'échec de vérification dans le délai préétabli ;
et la seconde carte de ligne d'envoi (112) comprend :
un module d'envoi (1120), adapté pour envoyer le message de vérification de continuité ;
un appareil de contrôle de protocole maître émetteur (1121), adapté pour : résoudre le message de protocole APS pour obtenir la notification de commutation après réception du message de protocole APS comportant la notification de commutation depuis le dispositif récepteur (12), et diffuser la notification de commutation résolue ; et
un appareil émetteur sélectif (1122), adapté pour régler un état de l'entité de protection dans les entrées de table de réacheminement du dispositif d'envoi (11) sur un état d'envoi après réception de la notification de commutation diffusée par l'appareil de contrôle de protocole maître émetteur (1121).

6. Système APS selon la revendication 5, dans lequel
l'appareil de contrôle de protocole asservi (1214) comporte en outre ; un module de contrôle de protocole asservi (1214a), adapté pour : envoyer périodiquement un message d'état à la seconde carte de ligne réceptrice (122), et quand aucun message d'état n'est reçu depuis la seconde carte de ligne réceptrice (122) dans au moins une période, envoyer une notification d'actualisation de commutation à la seconde carte de ligne d'envoi (112) ;
l'appareil de contrôle de protocole maître récepteur (1224) comporte en outre : un module de contrôle de protocole maître (1224a), adapté pour envoyer périodiquement le message d'état à la première carte de ligne réceptrice (121) ;
l'appareil de contrôle de protocole maître émetteur (1121) est adapté en outre pour :
résoudre la notification d'actualisation de commutation après réception de la notification d'actualisation de commutation depuis le dispositif récepteur (12), et diffuser la notification d'actualisation de commutation résolue ; et
l'appareil émetteur sélectif (1122) est adapté en outre pour régler l'état de l'entité de protection dans les entrées de table de réacheminement du dispositif d'envoi (11) sur un état de non-envoi après réception de la notification d'actualisation de commutation diffusée par l'appareil de contrôle de protocole maître émetteur (1121).

7. Système APS selon la revendication 5, dans lequel la première carte de ligne d'envoi (111) comprend en outre :
un module de contrôle de protocole asservi (1110), adapté pour : envoyer périodiquement le message d'état à la seconde carte de ligne d'envoi (112), et quand aucun message d'état n'est reçu depuis la seconde carte de ligne d'envoi (112) dans au moins une période, notifier à l'appareil émetteur sélectif (1122) de régler l'état de l'entité opérationnelle dans les entrées de table de réacheminement du dispositif d'envoi (11) sur l'état d'envoi ; et
l'appareil de contrôle de protocole maître émetteur (1221) de la seconde carte de ligne d'envoi (111) est adapté en outre pour envoyer périodiquement le message d'état à la première carte de ligne d'envoi (112).

8. Procédé de Commutation de Protection Automatique, APS, pour exécuter une protection APS dans un réseau de transport à commutation de paquets, le procédé comprenant :
la vérification, par une première carte de ligne réceptrice (121) et une seconde carte de ligne réceptrice (122) au niveau d'un récepteur (12), qu'un message de vérification de continuité est reçu ou non depuis un émetteur (11) ; et
l'exécution d'une commutation de service si la première carte de ligne réceptrice (121) ne reçoit pas le message de vérification de continuité mais la seconde carte de ligne réceptrice (122) reçoit le message de vérification de continuité dans un délai préétabli, le procédé étant **caractérisé en ce que** la commutation de service comprend
l'envoi, par la seconde carte de ligne réceptrice (122) d'un message de protocole APS comportant une notification de commutation à la première carte de ligne réceptrice (121), et le réglage d'un état d'une entité de protection correspondant à la seconde carte de ligne réceptrice (122) dans des entrées de table de réacheminement de récepteur sur un état de réception ; et
le réglage, par la première carte de ligne réceptrice (121) après réception de la notification de commutation, d'un état d'une entité opérationnelle correspondant à la première carte de ligne réceptrice (121) dans les entrées de table de réacheminement de récepteur sur un état de rejet.

9. Procédé APS selon la revendication 8, comprenant en outre :
l'envoi périodique, par la première carte de ligne réceptrice (121) et la seconde carte de ligne réceptrice (122) d'un message d'état l'une à l'autre ; et
le réglage, par la première carte de ligne réceptrice (121), de l'état de l'entité opérationnelle correspondant à la première carte de ligne réceptrice (121) dans les entrées de table de réacheminement de récepteur sur l'état de réception et le réglage de l'état de l'entité de protection correspondant à la seconde carte de ligne réceptrice (122) sur l'état de rejet si aucun message d'état n'est reçu depuis la seconde carte de ligne réceptrice (122) dans au moins une période.

10. Procédé de Commutation de Protection Automatique, APS, pour exécuter une protection APS dans un réseau de transport à commutation de paquets, le procédé comprenant :
la vérification, par une première carte de ligne réceptrice (121) et une seconde carte de ligne réceptrice (122) au niveau d'un récepteur, qu'un message de vérification de continuité est reçu ou non depuis un émetteur ; et
l'exécution d'une commutation de service si la première carte de ligne réceptrice (121) ne reçoit pas le message de vérification de continuité mais la seconde carte de ligne réceptrice (122) reçoit le message de vérification de continuité dans un délai préétabli ;
**caractérisé en ce que** la commutation de service comprend :
l'envoi, par la seconde carte de ligne réceptrice (122) d'un message de protocole APS comportant une notification de commutation à la seconde carte de ligne d'envoi (112) ; et
le réglage, par la seconde carte de ligne d'envoi (112) après réception de la notification de commutation, d'un état d'une entité de protection correspondant à la seconde carte de ligne d'envoi (112) dans des entrées de table de réacheminement d'émetteur sur un état d'envoi.

11. Procédé APS selon la revendication 10, comprenant en outre :
l'envoi périodique, par la première carte de ligne réceptrice (121) et la seconde carte de ligne réceptrice (122) d'un message d'état l'une à l'autre ;
l'envoi, par la première carte de ligne réceptrice (121), d'une notification d'actualisation de commutation à la seconde carte de ligne d'envoi (112), quand aucun message d'état n'est reçu depuis la seconde carte de ligne réceptrice (122) dans au moins une période ;
le réglage, par la seconde carte de ligne d'envoi (112), de l'état de l'entité de protection dans les entrées de table de réacheminement d'émetteur sur un état de non-envoi après réception de la notification d'actualisation de commutation.

12. Procédé APS selon la revendication 10, comprenant en outre :
l'envoi périodique, par la première carte de ligne d'envoi (111) et la seconde carte de ligne d'envoi (112) d'un message d'état l'une à l'autre ; et
le réglage, par la première carte de ligne d'envoi (111), de l'état de l'entité opérationnelle correspondant à la première carte de ligne d'envoi (111) dans les entrées de table de réacheminement d'émetteur sur l'état d'envoi, si aucun message d'état n'est reçu depuis la seconde carte de ligne d'envoi (112) dans au moins une période.
